(19) Europäisches Patentamt
European Patent Office
Office européen des brevets

(11) **EP 3 924 710 B1**

(12) # EUROPÄISCHE PATENTSCHRIFT

(45) Veröffentlichungstag und Bekanntmachung des Hinweises auf die Patenterteilung:
**05.10.2022 Patentblatt 2022/40**

(21) Anmeldenummer: **20719649.4**

(22) Anmeldetag: **22.04.2020**

(51) Internationale Patentklassifikation (IPC):
**G01M 11/02** *(2006.01)* **G02C 7/06** *(2006.01)*

(52) Gemeinsame Patentklassifikation (CPC):
**G01M 11/0228;** G02C 7/063

(86) Internationale Anmeldenummer:
**PCT/EP2020/061258**

(87) Internationale Veröffentlichungsnummer:
**WO 2020/216810 (29.10.2020 Gazette 2020/44)**

(54) **VERFAHREN UND VORRICHTUNG ZUM VERMESSEN DER LOKALEN BRECHKRAFT UND/ODER DER BRECHKRAFTVERTEILUNG EINES BRILLENGLASES**

METHOD AND DEVICE FOR MEASURING THE LOCAL REFRACTIVE POWER AND/OR REFRACTIVE POWER DISTRIBUTION OF A SPECTACLE LENS

PROCÉDÉ ET DISPOSITIF DE MESURE DE LA FORCE DE RUPTURE LOCALE ET / OU DE LA RÉPARTITION DE LA FORCE DE RUPTURE D'UN VERRE DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2019 EP 19170714**

(43) Veröffentlichungstag der Anmeldung:
**22.12.2021 Patentblatt 2021/51**

(73) Patentinhaber: **Carl Zeiss Vision International GmbH**
**73430 Aalen (DE)**

(72) Erfinder: **GLASENAPP, Carsten**
**73447 Oberkochen (DE)**

(74) Vertreter: **Gauss, Nikolai et al**
**Pfiz/Gauss Patentanwälte PartmbB**
**Tübingerstraße 26**
**70178 Stuttgart (DE)**

(56) Entgegenhaltungen:
EP-A1- 2 392 961    EP-A1- 2 608 109
WO-A1-2016/076530    WO-A1-2016/207412
WO-A1-2017/134275    WO-A1-2017/205903
US-A1- 2015 029 323

**Beschreibung**

Die Erfindung betrifft ein Verfahren zum Vermessen der lokalen Brechkraft und/oder der Brechkraftverteilung eines linken und/oder eines rechten Brillenglases, vorzugsweise in einer Brillenfassung, in Trageposition auf dem Kopf, vorzugsweise im Gesicht, eines Brillenträgers. Darüber hinaus betrifft die Erfindung ein Computerprogrammprodukt mit einem Computerprogramm mit Programmcode, ein computerlesbares Speichermedium, einen computerlesbaren Datenträger, ein Datenträgersignal sowie eine Vorrichtung zur Durchführung des Verfahrens.

Um einem Brillenträger das scharfe Sehen zu ermöglichen, müssen die Brillengläser in der Brillenfassung zu den Augen des Brillenträgers korrekt positioniert und ausgerichtet werden. Das korrekte Ausrichten und Positionieren ist grundsätzlich bei allen Brillengläsern erforderlich. Besondere Bedeutung hat das korrekte Ausrichten und Positionieren der Brillengläser insbesondere bei individualisierten optischen Brillenglasdesigns, bei torischen Brillenglasdesigns, bei Brillengläsern mit hoher dioptrischer Wirkung und bei Gleitsicht-Brillengläsern. Gleitsicht-Brillengläser ermöglichen Brillenträgern das scharfe Sehen in unterschiedlichen Gebrauchssituationen, z. B. in unterschiedlichen Entfernungen, nur durch Verändern der Blickrichtung, ohne dass es dabei eines größeren Akkommodationserfolges der Augen bedarf. Gleitsicht-Brillengläser sind gemäß DIN EN ISO 13666:2013-10, Absatz 8.3.5 Brillengläser mit mindestens einer Gleitsichtfläche und einer zunehmenden (positiven) dioptrischen Wirkung, wenn der Brillenträger nach unten blickt. Individualisierte Brillengläser und/oder Gleitsicht-Brillengläser haben einen oder mehrere Bezugspunkte, z. B. einen Fern-Durchblickpunkt und/oder einen Nah-Durchblickpunkt, deren Lage, je nach Gebrauchssituation an den Ort der Pupillen der Augen eines Brillenträgers angepasst werden muss. Der Fern-Durchblickpunkt ist gemäß DIN EN ISO 13666:2013-10, Absatz 5.16, die angenommene Lage des Durchblickpunkts auf einem Brillenglas für das Sehen in die Ferne unter bestimmten Bedingungen. Der Nah-Durchblickpunkt ist gemäß DIN EN ISO 13666:2013-10, Absatz 5.17, die angenommene Lage des Durchblickpunkts auf einem Brillenglas für das Sehen in die Nähe unter bestimmten Bedingungen. Bei torischen Brillenglasdesigns besteht außerdem die Notwendigkeit der für einen Brillenträger richtigen Orientierung ihrer zylindrischen Wirkung.

Aus der WO 2016/207412 A1 sind eine Vorrichtung und ein Verfahren der eingangs genannten Art bekannt. Dort ist das Vermessen der lokalen Brechkraft eines linken und/oder rechten Brillenglases in einer Brillenfassung mit einer Messvorrichtung beschrieben, in der die Brillenfassung angeordnet wird. Diese Messvorrichtung enthält eine Bilderfassungseinrichtung und ein Display für das Anzeigen einer Teststruktur, dessen Lage relativ zu der Bilderfassungseinrichtung bekannt ist. Mittels der Bilderfassungseinrichtung wird die an dem Display zur Anzeige gebrachte Teststruktur mit einem Abbildungsstrahlengang erfasst, der das linke und/oder das rechte Brillenglas in der Brillenfassung durchsetzt. Zusätzlich wird mittels des Displays ein Abschnitt der Brillenfassung erfasst, der ein Koordinatensystem der Brillenfassung definiert. In einer Rechnereinheit wird dann mittels Bildverarbeitung aus dem erfassten Abschnitt der Brillenfassung und der erfassten Abbildung der Teststruktur sowie aus den Koordinaten der Teststruktur und der erfassten Abbildung der Teststruktur in einem zu dem Koordinatensystem der Brillenfassung referenzierten Koordinatensystem die lokale Brechkraft eines linken und/oder rechten Brillenglases bestimmt.

Die EP 2 608 109 A1 offenbart ein Verfahren zur Ermittlung einer Brechkraft eines Brillenglases in Trageposition. Dabei wird eine Aufnahme des Brillenträgers ohne Brillenfassung und eine Aufnahme des Brillenträgers mit Brillenfassung erfasst und in beiden Aufnahmen die Größe der Iris ermittelt. Aus dem Größenunterschied und der Brennweite der Kamera wird auf die Brechkraft des Brillenglases geschlossen.

Aus der WO 2016 076530 A1 ist ebenfalls ein Verfahren zur Messung der Brechkraft einer Brille bekannt, bei dem aus dem Größenunterschied eines Objekts zwischen einer Aufnahme ohne Brillenglas und einer Aufnahme durch das Brillenglas auf die Brechkraft der Linse geschlossen wird. Diese Verfahren ermöglichen jedoch keine lokale Bestimmung der Brechkraft an einzelnen Punkten auf dem Brillenglas sowie die Bestimmung der einzelnen Strahlengänge durch das Brillenglas.

In der US 2015 0029323 A1 ist ein Verfahren beschrieben, das anhand der Position einer Gesichtskontur, die einmal ohne Brillenfassung und einmal durch das Brillenglas erfasst wird, auf die Brechkraft des Brillenglases schließt.

Insbesondere bei Brillen mit Gleitsicht-Brillengläsern ist es von Interesse, deren von der genauen Lage des linken bzw. rechten Brillenglases am Kopf des Brillenträgers abhängige Wirkung genau zu kennen. Mittels Messvorrichtungen, die für das Vermessen von in einer Haltevorrichtung aufgenommenen Brillen mit Brillengläsern dienen, lässt sich diese Wirkung lediglich abschätzen, nicht aber bestimmen, da hier die genaue Lage des linken bzw. rechten Brillenglases am Kopf des Brillenträgers und/oder die Position des linken bzw. rechten Brillenglases in Bezug auf den Augendrehpunkt angenommen werden muss.

Aufgabe der Erfindung ist es, auf einfache Weise und ohne großen apparativen Aufwand die fokussierende oder die dioptrische Wirkung eines linken und/oder eines rechten Brillenglases in einer Brillenfassung in Trageposition auf dem Kopf des Brillenträgers zu vermessen, z. B. für die Ferne und/oder für die Nähe.

Diese Aufgabe wird durch das in Anspruch 1 angegebene Verfahren gelöst. Vorteilhafte Weiterbildungen der Erfindung sind in den abhängigen Ansprüchen angegeben.

Die Erfindung beruht auf dem Gedanken, dass insbesondere mit einem wenigstens eine Bilderfassungseinrichtung aufweisenden mobilen Endgerät, wie z. B. einem Smartphone oder einer Kamera, das ein Brillenträger in seiner Hand hält, Abbildungen des Kopfs, vorzugsweise des Gesichts, des Brillenträgers erfasst werden können, die für unterschiedliche Blickrichtungen durch ein linkes bzw. rechtes Brillenglas hindurch aufgenommene Abbildungen wenigstens von dessen Augen zeigen, die Abbildungen dazu herangezogen werden können, die lokale Brechkraft des linken und/oder rechten Brillenglases zu vermessen oder zu bestimmen und/oder für das linke und/oder rechte Brillenglas eine Brechkraftverteilung anzugeben, wenn die Form bzw. Größe eines vorderen Augenabschnittes des linken und/oder rechten Auges des Brillenträgers sowie die Lage der von dem Brillenträger getragenen Brille an dessen Kopf, vorzugsweise in dessen Gesicht, bekannt ist, diese bei dem Erfassen der unterschiedlichen Abbildungen nicht verrutscht, und die erfassten Abbildungen das linke und/oder rechte Brillenglas mit einer zu einer jeweiligen Aufnahmeposition weisenden Blickrichtung zeigen. Unter zu einer jeweiligen Aufnahmeposition weisenden Blickrichtung ist bevorzugt die Fixierung eines beliebigen und ortsfesten Punkts auf der Bilderfassungseinrichtung zu verstehen.

Jede Abbildung des Kopfes, vorzugsweise des Gesichts, des Brillenträgers, die eine für eine Blickrichtung durch ein linkes und/oder rechtes Brillenglas hindurch aufgenommene Abbildung von wenigstens dessen Augen zeigt, kann, wenn die Form bzw. Größe eines vorderen Augenabschnittes des linken und/oder rechten Auges des Brillenträgers sowie die Lage der von dem Brillenträger getragenen Brille an dessen Kopf, vorzugsweise in dessen Gesicht, bekannt ist, diese bei dem Erfassen der unterschiedlichen Abbildungen nicht verrutscht, und die erfasste Abbildung das linke und/oder rechte Brillenglas mit einer zu einer jeweiligen Aufnahmeposition weisenden Blickrichtung zeigt, dazu herangezogen werden, die lokale Brechkraft des linken und/oder rechten Brillenglases für diese Blickrichtung zu bestimmen.

Wenigstens zwei Abbildungen des Kopfes, vorzugsweise des Gesichts des Brillenträgers, die wenigstens zwei für jeweils eine Blickrichtung durch ein linkes und/oder rechtes Brillenglas hindurch aufgenommene Abbildungen von wenigstens dessen Augen zeigen, können, wenn die Form bzw. Größe eines vorderen Augenabschnittes des linken und/oder rechten Auges des Brillenträgers sowie die Lage der von dem Brillenträger getragenen Brille an dessen Kopf, vorzugsweise in dessen Gesicht, bekannt ist, diese bei dem Erfassen der unterschiedlichen Abbildungen nicht verrutscht, und die erfassten wenigstens zwei Abbildungen das linke und/oder rechte Brillenglas jeweils mit einer zu einer jeweiligen Aufnahmeposition weisenden Blickrichtung zeigen, dazu herangezogen werden, die Brechkraftverteilung des linken und/oder rechten Brillenglases in Abhängigkeit von der jeweiligen Blickrichtung zu bestimmen.

Unter Brechkraft versteht diese Erfindung die fokussierende Wirkung oder die dioptrische Wirkung eines Brillenglases. Unter der fokussierenden Wirkung versteht diese Erfindung entsprechend der in DIN EN ISO 13666:2013-10, Absatz 9.2, angegebenen Definition den Sammelbegriff für die sphärische und astigmatische Wirkung eines Brillenglases. Unter der dioptrischen Wirkung eines Brillenglases versteht diese Erfindung entsprechend der in DIN EN ISO 13666:2013-10, Absatz 9.3, angegebenen Definition den Sammelbegriff für die fokussierende und die prismatische Wirkung des Brillenglases. Unter der prismatischen Wirkung eines Brillenglases versteht diese Erfindung entsprechend der in DIN EN ISO 13666:2013-10, Absatz 10.9, angegebenen Definition den Sammelbegriff für prismatische Ablenkung und Basislage.

Unter lokaler Brechkraft versteht diese Erfindung die lokale fokussierende Wirkung oder die lokale dioptrische Wirkung eines Brillenglases.

Unter Brechkraftverteilung versteht diese Erfindung die ortsaufgelöste fokussierende Wirkung oder die ortsaufgelöste dioptrische Wirkung eines Brillenglases.

Unter einem mobilen Endgerät ist bevorzugt eine Vorrichtung zu verstehen, welche zumindest einen programmierbaren Prozessor sowie wenigstens eine Bilderfassungseinrichtung, z. B. wenigstens eine Kamera, und wenigstens einen Beschleunigungssensor umfasst, und welche bevorzugt dazu ausgelegt ist, getragen zu werden, d. h. hinsichtlich Dimensionen und Gewicht derart ausgestaltet ist, dass sie von einer Person mitführbar ist. In dem mobilen Endgerät können weitere Komponenten vorhanden sein, wie zum Beispiel wenigstens ein Bildschirm, wenigstens eine Lichtquelle für beispielsweise sichtbares Licht aus einem Wellenlängenbereich von 380 nm bis 780 nm und/oder infrarotes Licht aus einem Wellenlängenbereich von 780 nm bis 1 mm und/oder wenigstens ein Lichtempfänger mit einer Sensibilität für beispielsweise sichtbares Licht aus einem Wellenlängenbereich von 380 nm bis 780 nm und/oder infrarotes Licht aus einem Wellenlängenbereich von >780 nm bis 1 mm. Typische Beispiele für derartige mobile Endgeräte sind Smartphones oder Tablet-PCs, die wenigstens einen Bildschirm, beispielsweise einen Sensorbildschirm (Touchscreen), wenigstens eine Bilderfassungseinrichtung, z. B. wenigstens eine Kamera, wenigstens einen Beschleunigungssensor, wenigstens eine Lichtquelle, wenigstens einen Lichtempfänger und weitere Komponenten, wie drahtlosen Schnittstellen für Mobilfunk oder WLAN (Wireless LAN) aufweisen können.

Bei dem in Anspruch 1 angegebenen Verfahren zum Vermessen der lokalen Brechkraft und/oder der Brechkraftverteilung eines linken und/oder eines rechten Brillenglases in einer Brillenfassung in Trageposition auf dem Kopf, vorzugsweise im Gesicht, eines Brillenträgers werden in einem ersten Schritt wenigstens zwei erste Abbildungen aus relativ zu dem Kopf unterschiedlichen Aufnahmepositionen heraus erfasst. Zur Bestimmung der lokalen Brechkraft und/oder der Brechkraftverteilung am linken Brillenglas enthalten diese wenigstens zwei ersten Abbildungen dabei jeweils ein Bild wenigstens i) eines vorderen Augenabschnitts eines linken Auges oder ii) eines vorderen Augenabschnitts eines linken Auges und eines Teils des Gesichts mit jeweils zwei voneinander beabstandeten Strukturpunkten sowie mit wenigstens einem Abschnitt der Brillenfassung in Trageposition darin, wobei das linke Auge jeweils eine zu der Aufnahmeposition weisende Blickrichtung hat und wobei ein die wenigstens zwei Strukturpunkte abbildender Abbildungsstrahlengang das linke Brillenglas durchsetzt; und/oder alternativ ein Bild eines i) vorderen Augenabschnitts eines rechten Auges oder ii) eines vorderen Augenabschnitts eines rechten Auges und eines Teils des Gesichts mit jeweils wenigstens zwei voneinander beabstandeten Strukturpunkten sowie wenigstens einem Abschnitt der Brillenfassung in Trageposition darin, wobei das rechte Auge jeweils eine zu der Aufnahmeposition weisende Blickrichtung hat und wobei ein die wenigstens zwei Strukturpunkte abbildender Abbildungsstrahlengang das rechte Brillenglas durchsetzt.

In einem weiteren Schritt werden wenigstens zwei zweite Abbildungen aus relativ zu dem Kopf unterschiedlichen Aufnahmen heraus erfasst, wobei die wenigstens zwei zweiten Abbildungen jeweils enthalten: ein Bild der wenigstens zwei voneinander beabstandeten Strukturpunkte des i) vorderen Augenabschnitts des linken Auges oder des ii) vorderen Augenabschnitts des linken Auges und des Teils des Gesichts ohne die Brillenfassung, enthaltend das linke Brillenglas, und/oder alternativ ein Bild der wenigstens zwei Strukturpunkte des i) vorderen Augenabschnitts des rechten Auges oder des ii) vorderen Augenabschnitts des rechten Auges und des Teils des Gesichts ohne die Brillenfassung, enthaltend das rechte Brillenglas.

In einem weiteren Schritt werden die Koordinaten der wenigstens zwei Strukturpunkte des i) vorderen Augenabschnitts des linken Auges oder ii) des vorderen Augenabschnitts des linken Auges und des Teils des Gesichts und/oder der wenigstens zwei Strukturpunkte des i) vorderen Augenabschnitts des rechten Auges oder ii) des vorderen Augenabschnitts des rechten Auges und des Teils des Gesichts aus den wenigstens zwei zweiten Abbildungen in einem Koordinatensystem mittels Bildauswertung mit Triangulation berechnet, das zu einem zu dem Kopf des Brillenträgers ortsfesten Koordinatensystem referenziert ist.

Das Verfahren enthält einen Schritt des Bestimmens des Durchblickpunktes durch das linke Brillenglas aus wenigstens einer ersten Abbildung jeweils aus einem aus dem Bild eines vorderen Augenabschnitts des linken Auges mittels Bildauswertung bestimmten Zentrum einer Bildstruktur aus der Gruppe Pupillenbild, Irisbild und Brillenfassungsinformationsdaten und/oder des Bestimmens des Durchblickpunktes durch das rechte Brillenglas aus wenigstens einer ersten Abbildung jeweils aus einem aus dem Bild eines vorderen Augenabschnitts des rechten Auges mittels Bildauswertung bestimmten Zentrum einer Bildstruktur aus der Gruppe Pupillenbild, Irisbild und Brillenfassungsinformationsdaten, wobei die Brillenfassungsinformationsdaten mit Informationen aus der Gruppe Position, Lage, Form und Koordinaten der Brillenfassung aus wenigstens zwei einen identischen Abschnitt der Brillenfassung enthaltenden Abbildungen aus der Gruppe der wenigstens zwei ersten Abbildungen in einem Koordinatensystem mittels Bildauswertung mit Triangulation berechnet werden, das zu einem zu dem Kopf des Brillenträgers ortsfesten Koordinatensystem referenziert ist.

Das Verfahren enthält auch einen Schritt des Bestimmens einer lokalen dioptrische Wirkung des linken Brillenglases an dem Durchblickpunkt, bei dem aus den aus den wenigstens zwei zweiten Abbildungen berechneten Koordinaten der wenigstens zwei Strukturpunkte des i) vorderen Augenabschnitts des linken Auges oder des ii) vorderen Augenabschnitts des linken Auges und des Teils des Gesichts sowie aus den wenigstens zwei ersten Abbildungen mit Bildern der wenigstens zwei Strukturpunkte die lokale Brechkraft $k(x,y)$ des linken Brillenglases an dem Durchblickpunkt aus einem Verhältnis einer anhand der wenigstens zwei Strukturpunkte ermittelten Größe einer Struktur in wenigstens einer der wenigstens zwei ersten Abbildungen zu der Größe dieser Struktur in wenigsten einer der wenigstens zwei zweiten Abbildungen bestimmt wird; und/oder einer lokalen dioptrische Wirkung des rechten Brillenglases an dem Durchblickpunkt, bei dem aus den aus den wenigstens zwei zweiten Abbildungen berechneten Koordinaten der wenigstens zwei Strukturpunkte des vorderen Augenabschnitts des rechten Auges oder des ii) vorderen Augenabschnitts des rechten Auges und des Teils des Gesichts und aus wenigstens zwei ersten Abbildungen mit Bildern der wenigstens zwei Strukturpunkte die lokale Brechkraft $k(x,y)$ des rechten Brillenglases an dem Durchblickpunkt aus einem Verhältnis einer anhand der wenigstens zwei Strukturpunkte ermittelten Größe einer Struktur in wenigstens einer der wenigstens zwei ersten Abbildungen zu der Größe dieser Struktur in wenigsten einer der wenigstens zwei zweiten Abbildungen bestimmt wird.

Unter einer Brillenfassung in Trageposition auf dem Kopf, vorzugsweise im Gesicht, eines Brillenträgers versteht die Erfindung die, beispielsweise von einem Augenoptiker, angepasste Position und/oder den korrekten Sitz der Brillenfassung im Gesicht. Idealerweise verrutscht die Brillenfassung in Trageposition auf dem Kopf, vorzugsweise im Gesicht, eines Brillenträgers nicht.

Zu bemerken ist, dass der vordere Augenabschnitt eines Auges insbesondere die Bindehaut, die Hornhaut, die Lederhaut, die Iris, den Ziliarkörper, das Epithel der Iris und des Ziliarkörpers, die vordere und hintere Augenkammer, die Linse und die Pupille enthält. Die Abbildungen, also sowohl die wenigstens zwei ersten als auch die wenigstens zwei zweiten Abbildungen, müssen nicht zwingend alle vorstehend genannten Bestandteile des vorderen Augenabschnitts umfassen. Durch die zusätzliche Abbildung wenigstens eines Teils des Gesichts und/oder wenigstens eines Teils des Gesichts mit Brillenfassung in Trageposition wird die Position der Augen im Gesicht und die Blickrichtung erfasst. Die Abbildungen des vorderen Augenabschnitts umfassen bevorzugt wenigstens die Pupille, weiter bevorzugt wenigstens die Pupille und die Iris.

Unter einem Strukturpunkt i) eines vorderen Augenabschnitts oder ii) eines vorderen Augenabschnitts und eines Teils des Gesichts oder iii) eines vorderen Augenabschnitts und eines Teils des Gesichts mit Brillenfassung in Trageposition wird vorliegend jeweils ein geometrischer Punkt einer Struktur verstanden, deren Bild in wenigstens einer Abbildung oder Aufnahme des Objekts, bevorzugt des Kopfs, weiter bevorzugt des Gesichts, eines Brillenträgers, durch Erfassen der Szene, vorzugsweise i) eines vorderen Augenabschnitts oder ii) eines vorderen Augenabschnitts und eines Teils des Gesichts oder iii) eines vorderen Augenabschnitts und eines Teils des Gesichts mit Brillenfassung in Trageposition, jeweils mit wenigstens einer Bilderfassungseinrichtung insbesondere aufgrund einer von der Strukturumgebung unterschiedlichen Helligkeit und/oder Farbe eindeutig zu erkennen ist.

Ein Strukturpunkt eines i) vorderen Augenabschnitts oder ii) eines vorderen Augenabschnitts und eines Teils des Gesichts oder iii) eines vorderen Augenabschnitts und eines Teils des Gesichts mit Brillenfassung in Trageposition kann vorliegend z. B. ein Punkt auf einer Ecke oder Kante oder auf dem Rand einer Struktur oder innerhalb der Struktur selbst in Form einer Feinstruktur der Iris, der Sklera oder der Linse sein.

Unter wenigstens zwei zueinander beabstandeten Strukturpunkten versteht die Erfindung mehrere Strukturpunkte, von denen je zwei einen räumlichen Abstand zueinander aufweisen. Unter wenigstens zwei zueinander beabstandeten Strukturpunkten versteht die Erfindung insbesondere wenigstens zwei Strukturpunkte, die einen räumlichen Abstand zueinander aufweisen.

Unter einem Abbildungsstrahlengang für einen Strukturpunkt bzw. unter einem einen Strukturpunkt abbildenden Abbildungsstrahlengang wird vorliegend jeweils der Verlauf der Lichtstrahlen verstanden, die eine optische Abbildung des Strukturpunkts aus der Szene, vorzugsweise eines vorderen Augenabschnitts, oder ii) eines vorderen Augenabschnitts und eines Teils des Gesichts oder iii) eines vorderen Augenabschnitts und eines Teils des Gesichts mit Brillenfassung in Trageposition, jeweils als ein Strukturpunktbild in die Abbildung der Szene, vorzugsweise i) eines vorderen Augenabschnitts oder ii) eines vorderen Augenabschnitts und eines Teils des Gesichts oder iii) eines vorderen Augenabschnitts und eines Teils des Gesichts mit Brillenfassung in Trageposition, jeweils in wenigstens einer Bilderfassungseinrichtung bewirken. Als der Hauptstrahl des Abbildungsstrahlengangs für einen Strukturpunkt wird im Folgenden dessen eine Symmetrieachse bildende optische Achse bezeichnet.

Unter der Blickrichtung eines Auges versteht die Erfindung die Richtung eines das Zentrum der Pupille durchsetzenden Vektors, der an dem das Zentrum des Augapfels bildenden Augenrotationspunkt beginnt, um den das Auge für das Betrachten von Objekten, die in unterschiedlichen Richtungen angeordnet sind, rotieren kann, ohne dass hierfür die Haltung des Kopfes verändert werden muss.

Die Begriffe "erste" und "zweite" in Bezug auf die Abbildungen beziehen sich lediglich darauf, ob die wenigstens zwei Strukturpunkte der jeweiligen Abbildung mit oder ohne Brillenglas erfasst werden, nicht unbedingt auf die Reihenfolge, in der die Abbildungen erfasst werden. Die wenigstens zwei Strukturpunkte werden in jeder ersten Abbildung mit Brillenglas und in jeder zweiten Abbildung ohne Brillenglas erfasst. Die wenigstens zwei Strukturpunkte sind bevorzugt in der ersten und in der zweiten Abbildung identisch. Die erste Abbildung mit Brillenglas kann vor oder nach der zweiten Abbildung ohne Brillenglas erfasst werden.

Unter den Koordinaten eines Punktes versteht die Erfindung einen dreidimensionalen Vektor, der die Lage des Punktes im Raum in Bezug auf den Ursprung eines Koordinatensystems mit drei Raumachsen angibt.

Das zu der Brillenfassung ortsfeste Koordinatensystem bezeichnet dabei ein Koordinatensystem, das sich relativ zu der Brillenfassung immer am gleichen Ort befindet. Das Koordinatensystem kann z. B. anhand eines Abschnitts der Brillenfassung definiert sein, anhand eines Punkts und/oder einer Achse des Kopfes, anhand extrinsischer Parameter wenigstens einer Bilderfassungseinrichtung im Raum oder anhand eines auf sonstige Weise beliebig gewählten Koordinatensystems im Raum.

Unter zwei zueinander referenzierten Koordinatensystemen werden dabei Koordinatensysteme verstanden, zu denen bekannt ist, wie die Koordinaten eines Punktes oder Vektors aus einem Koordinatensystem in dem anderen Koordinatensystem lauten.

Zu bemerken ist, dass diese Bildauswertung insbesondere in einer Rechnereinheit erfolgen kann, dass es jedoch grundsätzlich möglich ist, dass diese Bildauswertung durch eine Person erfolgt, die das Verfahren zum Vermessen der lokalen Brechkraft und/oder der Brechkraftverteilung eines linken und/oder eines rechten Brillenglases anwendet.

Zu bemerken ist auch, dass für die Bestimmung von Koordinaten zu einem Strukturpunkt in einem Koordinatensystem, das zu einem zu dem Kopf, vorzugsweise zu dem Gesicht, des Brillenträgers ortsfesten Koordinatensystem referenziert ist, das Erfassen von wenigstens zwei Abbildungen des Strukturpunkts aus unterschiedlichen Aufnahmepositionen erforderlich ist, wobei die Abbildungsstrahlengänge für den Strukturpunkt weder das rechte noch das linke Brillenglas durchsetzen dürfen.

Die Bildauswertung jeder ersten und zweiten Abbildung umfasst bevorzugt bildverarbeitende Technologien, wie beispielsweise Klassifizierung, Segmentierung und Triangulation. Mit Hilfe von Verfahren zur Objekterkennung, wie Segmentierung und Klassifizierung, wird jede erste und jede zweite Abbildung bevorzugt nach Objekten der Klassen Kopf, Gesicht, Brillenfassung und/oder vorderer Augenabschnitt, insbesondere Auge, Iris und Pupille untersucht. Die Verfahren zur Objekterkennung können sowohl klassischer Natur, wie z. B. Thresholding, kanten- oder regionsbasierte Segmentierung, optischer Fluss als auch lernender Natur sein. Sind die Verfahren zur Objekterkennung und/oder Segmentierung lernender Natur, wie bei der Anwendung von lernenden Algorithmen, ist es notwendig, im Vorfeld ein neuronales Netzwerk mit augmentierten Trainingsdaten zu trainieren. Das Ergebnis jedes dieser Verfahren zur Objekterkennung und/oder Segmentierung ist die Position, Lage und Begrenzung der Objekte, hier der Klassen Kopf, Gesicht, Brillenfassung, vorderer Augenabschnitt, insbesondere Auge, Iris und Pupille. Eine zusätzliche Information ist die Existenz der jeweiligen Objekte in den jeweiligen Abbildungen. Es kann beispielsweise auf diese Weise erkannt werden, ob eine Brillenfassung und/oder ein Brillenglas in der Abbildung vorhanden ist oder nicht. Somit kann die Zuordnung, ob es sich um eine erste oder um eine zweite Abbildung handelt, auch nach deren jeweiliger Aufnahme erfolgen. Die Zuordnung, ob es sich um eine erste oder um eine zweite Abbildung handelt, kann weiterhin in Unkenntnis, ob es sich um eine erste oder um eine zweite Aufnahme gehandelt hat, erfolgen.

Je mehr erste Abbildungen und/oder je mehr zweite Abbildungen erfasst werden, desto genauer kann die lokale Brechkraft an jedem Durchblickpunkt des Brillenglases bzw. desto genauer kann die Brechkraftverteilung des Brillenglases bestimmt werden.

In dem in Anspruch 1 angegebenen Verfahren wird die lokale Brechkraft des linken und/oder rechten Brillenglases jeweils an einem Durchblickunkt des linken und/oder rechten Brillenglases bestimmt, durch den das linke Auge bzw. das rechte Auge des Brillenträgers mit einer zu der jeweiligen Aufnahmeposition weisenden Blickrichtung beim Erfassen einer ersten Abbildung, bevorzugt wenigstens einer ersten Abbildung, weiter bevorzugt beim Erfassen von wenigstens zwei ersten Abbildungen blickt.

Der Durchblickpunkt durch das linke Brillenglas wenigstens einer ersten Abbildung, bevorzugt wenigstens zwei ersten Abbildungen, wird jeweils aus einem aus dem Bild i) eines vorderen Augenabschnitts des linken Auges oder ii) eines vorderen Augenabschnitts des linken Auges und eines Teils des Gesichts oder iii) eines vorderen Augenabschnitts des linken Auges und eines Teils des Gesichts mit Brillenfassung in Trageposition, jeweils mittels Bildauswertung, vorzugsweise mittels Triangulation, ermittelten Zentrum einer Bildstruktur aus der Gruppe Pupillenbild, Irisbild und den Brillenfassungsinformationsdaten bestimmt. Der Durchblickpunkt durch das rechte Brillenglas wird entsprechend aus wenigstens einer ersten Abbildung, bevorzugt wenigstens zwei ersten Abbildungen, jeweils aus einem aus dem Bild i) eines vorderen Augenabschnitts des rechten Auges oder ii) eines vorderen Augenabschnitts des rechten Auges und eines Teils des Gesichts oder iii) eines vorderen Augenabschnitts des rechten Auges und eines Teils des Gesichts mit Brillenfassung in Trageposition mittels Bildauswertung, vorzugsweise mittels Triangulation, ermittelten Zentrum einer Bildstruktur aus der Gruppe Pupillenbild, Irisbild und den Brillenfassungsinformationsdaten bestimmt.

Die Bildstruktur kann dabei z. B. ein Pupillenbild sein, das ein Abbild der Pupille des linken bzw. rechten Auges ist. Die Bildstruktur kann aber auch ein Irisbild, d. h. ein Abbild der Iris des linken bzw. rechten Auges sein. Das Zentrum dieser Bildstruktur wird dann aus dem entsprechenden Bild i) eines vorderen Augenabschnitts des linken bzw. rechten Auges oder ii) eines vorderen Augenabschnitts des linken bzw. rechten Auges und eines Teils des Gesichts oder iii) vorderen Augenabschnitts des linken bzw. rechten Auges und eines Teils des Gesichts mit Brillenfassung in Trageposition, jeweils mittels Bildauswertung, vorzugsweise mittels Triangulation, bestimmt.

Der Durchblickpunkt eines linken bzw. rechten Brillenglases kann dann insbesondere wie folgt berechnet werden: Zuerst wird das Zentrum der Bildstruktur, z. B. das Pupillenzentrum, in der wenigstens einen ersten Abbildung, bevorzugt in den wenigstens zwei ersten Abbildungen, anhand eines Algorithmus oder auch durch Annotation von Hand in der jeweiligen ersten Abbildung durch einen Nutzer bestimmt. Zu dem Pupillenzentrum auf der Bildebene wird darauf anhand intrinsischer und extrinsischer Parameter der wenigstens einen Bilderfassungseinrichtung der zu diesem Punkt gehörende Hauptstrahl des Abbildungsstrahls berechnet. Mittels der Brillenfassungsinformationsdaten kann dann der Ort, an dem der Hauptstrahl am linken bzw. rechten Brillenglas gebrochen wird, als Schnittpunkt des Hauptstrahls mit dem linken bzw. rechten Brillenglas berechnet werden. Dieser Schnittpunkt entspricht dann dem Durchblickpunkt am linken bzw. rechten Brillenglas.

Schließlich wird zur Bestimmung der lokalen Brechkraft des linken bzw. rechten Brillenglases an dem Durchblickpunkt die aus den wenigstens zwei zweiten Abbildungen berechneten Koordinaten der wenigstens zwei Strukturpunkte des i) vorderen Augenabschnitts des linken bzw. rechten Auges oder des ii) vorderen Augenabschnitts des linken bzw. rechten Auges und eines Teils des Gesichts oder des iii) vorderen Augenabschnitts des linken bzw. rechten Auges und eines Teils des Gesichts mit Brillenfassung in Trageposition und das Bild dieser wenigstens zwei Strukturpunkte in einer Abbildung aus der Gruppe der wenigstens einen ersten Abbildung, bevorzugt der wenigstens zwei ersten Abbildungen herangezogen. Die wenigstens zwei Strukturpunkte der wenigstens einen ersten Abbildung, bevorzugt der wenigstens zwei ersten Abbildungen, und der wenigstens zwei zweiten Abbildungen sind bevorzugt identisch.

Eine Idee der Erfindung ist es, die lokale Brechkraft und/oder die Brechkraftverteilung des linken und/oder rechten Brillenglases aus einem Vergleich der Größen von Strukturen, z. B. der Iris, im i) vorderen Augenabschnitt des linken bzw. rechten Auges oder im ii) vorderen Augenabschnitt des linken bzw. rechten Auges und eines Teils des Gesichts oder im iii) vorderen Augenabschnitt des linken bzw. rechten Auges und eines Teils des Gesichts mit Brillenfassung in Trageposition zu ermitteln. Die Erfindung nutzt dabei aus, dass die realen Größen entsprechender Strukturen durch die Abstände der aus den wenigstens zwei zweiten Abbildungen berechneten Strukturpunkten festgelegt sind. Insbesondere wird die lokale Brechkraft des linken und/oder rechten Brillenglases am jeweiligen Durchblickpunkt durch das linke und/oder rechte Brillenglas bestimmt. Aus der Gesamtheit der lokalen Brechkräfte an den jeweiligen Durchblickpunkten wird die Brechkraftverteilung des linken und/oder rechten Brillenglases erhalten.

Eine Idee der Erfindung ist insbesondere, dass die scheinbaren Größen der Strukturen bei der Beobachtung durch das linke bzw. rechte Brillenglas wie folgt bestimmt werden können: zuerst werden zu den wenigstens zwei Strukturpunkten des i) vorderen Augenabschnitts des linken bzw. rechten Auges oder des ii) vorderen Augenabschnitts des linken bzw. rechten Auges und eines Teils des Gesichts oder des iii) vorderen Augenabschnitts des linken bzw. rechten Auges und eines Teils des Gesichts mit Brillenfassung in Trageposition, jeweils die zugehörigen Bilder der wenigstens zwei Strukturpunkte in der wenigstens einen ersten Abbildung, bevorzugt den wenigstens zwei ersten Abbildungen detektiert. Zu diesen Bildern werden aus den intrinsischen und extrinsischen Parametern der wenigstens einen Bilderfassungseinrichtung die Hauptstrahlen berechnet. Anschließend werden die Schnittpunkte der Hauptstrahlen mit dem linken bzw. rechten Brillenglas anhand der Brillenfassungsinformationsdaten bestimmt. Aus diesen Schnittpunkten kann weiterhin der jeweilige Abstand des Hornhautscheitels des linken und/oder rechten Auges zu der jeweiligen Rückfläche des linken und/oder rechten Brillenglases am jeweiligen Durchblickpunkt bestimmt werden. Die Rückfläche des Brillenglases ist gemäß DIN EN ISO 13666:2013-10, Abschnitt 5.9, die Fläche eines Brillenglases, die bestimmungsgemäß in der Brille dem Auge zugewandt liegt. Die Abstände dieser Schnittpunkte ergeben dann die scheinbaren Größen der Strukturen bei der Beobachtung durch das linke bzw. rechte Brillenglas. Aus dem Verhältnis der realen und scheinbaren Größen der Strukturen des i) vorderen linken bzw. rechten Augenabschnitts oder des ii) vorderen linken bzw. rechten Augenabschnitts und eines Teils des Gesichts oder des iii) vorderen linken bzw. rechten Augenabschnitts und eines Teils des Gesichts mit Brillenfassung in Trageposition zueinander kann dann jeweils auf die lokale Brechkraft und/oder die Brechkraftverteilung des linken bzw. rechten Brillenglases geschlossen werden.

In einer vorteilhaften Weiterbildung der Erfindung wird zusätzlich zur Bestimmung der lokalen fokussierenden Wirkung des linken Brillenglases bzw. rechten Brillenglases an dem Durchblickpunkt die lokale prismatische Wirkung und somit die lokale dioptrische Wirkung bestimmt. Diese wird anhand der Koordinaten eines Augenrotationspunkts des linken und/oder rechten Auges in einem Koordinatensystem, das zu einem zu dem Kopf, vorzugsweise zu einem zu dem Gesicht, des Brillenträgers ortsfesten Koordinatensystem referenziert ist, ermittelt.

Dabei wird ausgenutzt, dass die prismatische Wirkung des linken bzw. rechten Brillenglases aus der Ablenkung des Hauptstrahls zur Pupille des linken bzw. rechten Auges in einer ersten Abbildung, bevorzugt wenigstens einer ersten Abbildung, weiter bevorzugt wenigstens zwei ersten Abbildungen, am linken bzw. rechten Brillenglas bestimmt werden kann. Dieser Hauptstrahl verläuft nämlich entlang einer angenommenen Blickrichtung von dem Augenrotationspunkt des linken bzw. rechten Auges durch das Zentrum der Pupille des linken bzw. rechten Auges zum Durchblickpunkt des linken bzw. rechten Brillenglases und von dort zu der Bildebene der wenigstens einen Bilderfassungseinrichtung. Dieser Hauptstrahl wird dann aus den Koordinaten des Augenrotationspunkts des linken bzw. rechten Auges und dem Durchblickpunkt am linken bzw. rechten Brillenglas sowie den intrinsischen und extrinsischen Parametern der wenigstens einen Bilderfassungseinrichtung berechnet. Die intrinsischen Parameter definieren hierbei insbesondere wie der Kopf, vorzugsweise das Gesicht, des Brillenträgers in der wenigstens einen Bilderfassungseinrichtung abgebildet wird. Dieses beinhaltet vorzugsweise den Abbildungsmaßstab, die Verzeichnung und/oder die Verzerrung. Die intrinsischen Parameter definieren vorzugsweise weiterhin wie ein Strukturpunkt, der sich im internen Koordinatensystem der wenigstens einen Bilderfassungseinrichtung befindet, auf die Koordinaten der Pixel der Abbildung abgebildet wird. Die extrinsischen Parameter definieren insbesondere den Ort und die Lage der wenigstens einen Bilderfassungseinrichtung. Insbesondere umfassen die extrinsischen Parameter der wenigstens einen Bilderfassungseinrichtung Ort und Lage des Koordinatensystems der wenigstens einen Bilderfassungseinrichtung relativ zum Koordinatensystems des Kopfes, vorzugsweise des Gesichtes, des Brillenträgers.

Die Koordinaten des Augenrotationspunkts des linken Auges und/oder des Augenrotationspunkts des rechten Auges werden dabei aus einem für das linke Auge angenommenen Augendurchmesser $D_L$ und/oder aus einem für das rechte Auge angenommenen Augendurchmesser $D_R$ sowie aus Koordinaten wenigstens eines Strukturpunkt des Kopfes, vorzugsweise des Gesichts, berechnet. Die Koordinaten des wenigstens einen Strukturpunkts des Kopfes, vorzugsweise des Gesichts, z. B. der Nasenspitze, werden dazu aus wenigstens zwei Abbildungen aus der Gruppe der wenigstens einen ersten Abbildung, bevorzugt den zwei ersten Abbildungen und der wenigstens zwei zweiten Abbildungen bestimmt. Die Koordinaten des wenigstens einen Strukturpunkts des Kopfes, vorzugsweise des Gesichts, werden bevorzugt nur aus wenigstens zwei Abbildungen aus der Gruppe der wenigstens zwei zweiten Abbildungen bestimmt.

Vorteilhaft ist das Inbetrachtziehen anatomischen Wissens über die Lage des linken und/oder rechten Auges im Kopf, vorzugsweise im Gesicht, z. B. relativ zu den berechneten Strukturpunkten des Kopfes, vorzugsweise des Gesichts. Der Augendurchmesser $D_L$ bzw. $D_R$ ist abhängig vom Geschlecht und dem Alter des Probanden und wird vorzugsweise als ein Wert im Bereich von 22 mm - 23 mm angenommen.

Von Vorteil ist es auch, die 3D-Geometrie des gesamten Kopfes aus den wenigstens zwei zweiten Abbildungen und den intrinsischen und extrinsischen Parametern der wenigstens einen Bilderfassungseinrichtung zu berechnen, da so sowohl die Lage der Brillenfassung relativ zum Kopf, vorzugsweise zum Gesicht, als auch die Position des Augenrotationspunkts des linken und/oder rechten Auges möglichst genau bestimmt werden können.

Zu bemerken ist, dass in dem Schritt des Bestimmens einer lokalen dioptrischen Wirkung des linken Brillenglases an dem Durchblickpunkt (x,y) die lokale prismatische Wirkung grundsätzlich auch anhand eines Versatzes des vorderen Augenabschnittes in dem Bild des linken Auges ermittelt werden kann. Entsprechendes gilt auch für das Bestimmen einer lokalen dioptrischen Wirkung des rechten Brillenglases an dem Durchblickpunkt (x,y).

Ein Vorteil dieses Verfahrens ist, dass der Brillenträger in die Lage versetzt wird, selbst seine Brillengläser in seiner Brillenfassung in Trageposition auf dem Kopf, vorzugweise im Gesicht, oder selbst eines seiner Brillengläser in seiner Brillenfassung in Trageposition auf dem Kopf, vorzugsweise im Gesicht, in Bezug auf ihre lokale Brechkraft und/oder ihre Brechkraftverteilung zu vermessen. Somit ist es z. B. möglich, dass er online eine Bestellung für eine Zweitbrille aufgibt. Bei den Brillengläsern kann es sich beispielsweise um

- Einstärken-Brillengläser, bei denen gemäß DIN EN ISO 13666:2013-10, Abschnitt 8.3.1, von der Konstruktion her nur eine dioptrische Wirkung vorhanden ist; und/oder
- Mehrstärken-Brillengläser, bei denen gemäß DIN EN ISO 13666:2013-10, Abschnitt 8.3.2, von der Konstruktion her zwei oder mehr sichtbar verschiedene Teile mit unterschiedlichen fokussierenden Wirkungen vorhanden sind; und/oder
- Zweistärken-Brillengläser, definiert gemäß DIN EN ISO 13666:2013-10, Abschnitt 8.3.3, als Mehrstärken-Brillengläser mit zwei Teilen, üblicherweise für das Sehen in die Ferne und die Nähe; und/oder
- Dreistärken-Brillengläser, definiert gemäß DIN EN ISO 13666:2013-10, Abschnitt 8.3.4, als Mehrstärken-Brillengläser mit drei Teilen, üblicherweise für die Ferne, eine Zwischenentfernung und die Nähe; und/oder
- Gleitsicht-Brillengläser, definiert gemäß DIN EN ISO 13666:2013-10, Abschnitt 8.3.5, als Brillengläser mit mindestens einer Gleitsichtfläche und einer zunehmenden (positiven) Wirkung, wenn der Brillenträger nach unten blickt; und/oder
- degressive Brillengläser, definiert in DIN EN ISO 13666:2013-10, Abschnitt 8.3.6, als Brillengläser mit mindestens einer Gleitsichtfläche und einer abnehmenden Wirkung (d. h. einer Abschwächung der Wirkung), wenn der Brillenträger nach oben blickt,

handeln.

Ein weiterer Vorteil dieses Verfahrens ist, dass der Brillenträger in die Lage versetzt wird, selbst seine Brille, bevorzugt seine Brillenfassung enthaltend wenigstens eines, bevorzugt beide seiner Brillengläser, in Trageposition auf dem Kopf, vorzugweise im Gesicht, in Bezug auf ihre Zentrierparameter zu vermessen. Die Zentrierparameter umfassen hierbei wenigstens einen der nachstehenden Parameter:

- die Abstände x der jeweiligen Durchblickpunkte zu Geraden durch innerste Punkte der jeweiligen Randkurve des Brillenglases gemäß DIN EN ISO 13666:2013-10, Bild 12; und/oder
- die Abstände y der jeweiligen Durchblickpunkte zu Geraden durch unterste Punkte der jeweiligen Randkurve des Brillenglases gemäß DIN EN ISO 13666:2013-10, Bild 12; und/oder
- die Scheibenlänge a und die Scheibenhöhe b eines Kastensystems gemäß DIN EN ISO 13666:2013-10, Bild 12, bevorzugt einschließlich der Randkurve; und/oder
- den Hornhaut-Scheitelabstand, definiert in DIN EN ISO 13666:2013-10, Abschnitt 5.27, als der Abstand zwischen der Rückfläche des Brillenglases und dem Apex der Hornhaut gemessen in Blickrichtung senkrecht zur Fassungsebene; und/oder
- die Scheibenebene, definiert in DIN EN ISO 13666:2013-10, Abschnitt 17.1, als Ebene tangential zur Vorderfläche einer in die Brillenfassung eingearbeiteten Demo- oder Stütz-Scheibe in deren geometrischen Scheibenmittelpunkt; und/oder
- die Fassungsebene, definiert in DIN EN ISO 13666:2013-10, Abschnitt 17.2, als Ebene, durch die beiden vertikalen Mittellinien der rechten und der linken Scheibenebene; und/oder
- den Winkel $\alpha$ zwischen Scheibenebenen, die jeweils als Ebene des betreffenden Brillenglases festgelegt ist, und der Fassungsebene gemäß DIN EN ISO 13666:2013-10, Bild 11; und/oder
- den Vorneigungswinkel, definiert in DIN EN ISO 13666:2013-10, Abschnitt 5.18, als den Winkel in der Vertikalebene zwischen der Normale zur Vorderfläche eines Brillenglases in dessen Mittelpunkt nach Kastensystem und der Fixierlinie des Auges in Primärposition, die üblicherweise als horizontal angenommen wird.

Darüber hinaus kann mittels des hierin beschriebenen Verfahrens auch der Abstand des Hornhautscheitels des jeweiligen Auges zu dem jeweiligen Durchblickpunkt einer Blickrichtung durch das jeweilige Brillenglas bestimmt werden. Es kann für jeden Durchblickpunkt der Abstand des Hornhautscheitels des jeweiligen Auges zur Rückfläche des jeweiligen Brillenglases bestimmt werden.

Bevorzugt ist die Randkurve die in der dem Gesicht abgewandten Vorderfläche der Brillenfassung liegende formbestimmende Begrenzung des Brillenglases, die bei Halbrand- oder Vollrandbrillen teilweise oder ganz mit dem vorderseitig liegenden, inneren Rand der Brillenfassung zusammenfällt. Bei Vollrandbrillen ist in der dem Gesicht abgewandten Vorderfläche der Brillenfassung die Randkurve gleich dem vorderseitig liegenden Glasaußenrand oder dem vorderseitig liegenden Fassungsinnenrand. Bei Halbrandbrillen ist in der dem Gesicht abgewandten Vorderfläche der Brillenfassung die Randkurve gleich dem vorderseitig liegenden Glasaußenrand oder dem vorderseitig liegenden Fassungsinnenrand, soweit eine durch die Fassung gegebene Struktur gegeben ist. Soweit bei Halbrandbrillen keine durch die Fassung gegebene Struktur gegeben ist, ist in der dem Gesicht abgewandten Vorder¬fläche der Brillenfassung die Randkurve gleich dem vorderseitig liegenden Glasaußenrand. Bei rahmenlosen Brillen gibt es keine analoge Struktur der Fassung, d. h. der Begriff Randkurve bezeichnet hier in der dem Gesicht abgewandten Vorderfläche der Brillenfassung immer den vorderseitig liegenden Glasaußenrand.

Ein weiterer Vorteil dieses Verfahrens ist, dass der Brillenträger in die Lage versetzt wird, selbst seine Brille, bevorzugt seine Brillenfassung enthaltend wenigstens eines, bevorzugt beide seiner Brillengläser, in Trageposition auf dem Kopf, vorzugweise im Gesicht, sowohl in Bezug auf die lokale Brechkraft und/oder die Brechkraftverteilung wenigstens eines seiner Brillengläser als auch in Bezug auf die vorstehend aufgeführten Zentrierparameter seiner Brillenfassung in Trageposition auf seinem Kopf, vorzugsweise in seinem Gesicht, zu bestimmen. Aus der Kenntnis der Zentrierparameter, insbesondere aus der Kenntnis des Abstands des Hornhautscheitels zur Rückfläche des jeweiligen Brillenglases an jedem Durchblickpunkt ist es möglich, die lokale Brechkraft und/oder die Brechkraftverteilung des jeweiligen Brillenglases in einen Refraktionswert des linken und/oder rechten Auges (z. B. für die sphärische Korrektion, die zylindrische Korrektion, die Achslage, jeweils für die Ferne und/oder für die Nähe) umzurechnen. Somit wird durch das Vermessen des Brillenglases indirekt auch der Refraktionswert des rechten und/oder linken Auges des Brillenträgers ermittelt. Ebenfalls sind prismatische Korrektionen bestimmbar.

Ein weiterer Vorteil des Verfahrens ist, dass eine der lokale Brechkraft und/oder der Brechkraftverteilung des linken und/oder rechten Brillenglases entsprechende Kombination aus Krümmungsradien, Oberflächentopographie und Brechungsindex erhalten werden kann. Zusätzlich hierzu kann daneben auch die Randkurve des jeweiligen Brillenglases bestimmt werden.

Bei Erfassen der wenigstens zwei zweiten Abbildungen aus relativ zu dem Kopf, vorzugsweise dem Gesicht, des Brillenträgers unterschiedlichen Aufnahmepositionen heraus ist es von Vorteil, wenn der Brillenträger die Blickrichtung nicht verändert, damit die Koordinaten der wenigstens zwei Strukturpunkte des i) linken und/oder rechten vorderen Augenabschnitts oder des ii) linken und/oder rechten vorderen Augenabschnitts und eines Teils des Gesichts oder iii) des linken und/oder rechten vorderen Augenabschnitts und eines Teils des Gesichts mit Brillenfassung in Trageposition jeweils zuverlässig bestimmt werden können. Außerdem ist auf diese Weise die Blickrichtung des Brillenträgers dann für alle zweiten Aufnahmen identisch, was das Verfahren vereinfacht. Bei den wenigstens zwei Strukturpunkten der wenigstens zwei zweiten Abbildungen handelt es sich bevorzugt um die identischen wenigstens zwei Strukturpunkte aus der wenigstens einen ersten Abbildung oder aus den wenigstens zwei ersten Abbildungen.

Zu bemerken ist allerdings, dass bei Erfassen der wenigstens zwei zweiten Abbildungen i) eines vorderen Augenabschnitts des linken und/oder rechten Auges oder ii) eines vorderen Augenabschnitts des linken und/oder rechten Auges und eines Teils des Gesichts oder iii) eines vorderen Augenabschnitts des linken und/oder rechten Auges und eines Teils des Gesichts mit Brillenfassung in Trageposition jeweils die Blickrichtung auch zu der jeweiligen Aufnahmeposition weisen kann. Die Blickrichtung des linken bzw. rechten Auges zu einer jeden zweiten Abbildung kann nämlich aus dem Augenrotationspunkt des linken bzw. rechten Auges, dem Pupillenzentrum in der Abbildung und den intrinsischen und extrinsischen Parametern der Bilderfassungseinrichtung bestimmt werden und es kann anhand dieser Information die Bewegung der wenigstens zwei Strukturpunkte des i) vorderen Augenabschnitts des linken bzw. rechten Auges oder ii) des vorderen Augenabschnitts des linken bzw. rechten Auges und eines Teils des Gesichts oder iii) des vorderen Augenabschnitts des linken bzw. rechten Auges und eines Teils des Gesichts mit Brillenfassung in Trageposition jeweils korrigiert werden.

Bevorzugt werden die wenigstens zwei zweiten Abbildungen bei beliebiger Blickrichtung erfasst. Es ist also egal, wohin der Brillenträger bei Erfassen der wenigstens zwei zweiten Abbildungen blickt. Auch bei beliebiger Blickrichtung der wenigstens zwei zweiten Abbildungen ist es möglich, die Form des Kopfes und die Augenrotationspunkte zu bestimmen.

Um eine hohe Genauigkeit der Berechnungen zu ermöglichen, ist es ebenfalls von Vorteil, wenn die Brillenfassung auf dem Kopf, vorzugsweise im Gesicht, des Brillenträgers ihre Position und Lage nicht verändert, dass sie also während der Aufnahmen oder dem Erfassen der jeweiligen Abbildung nicht verrutscht.

Um Brillenfassungsinformationsdaten zu berechnen, können aus den Aufnahmen mit Brillenfassung anhand eines 3D-Rekonstruktionsverfahrens oder eines Tiefenschätzungsverfahrens Koordinaten der Brillenfassung ermittelt werden. Dabei kann die Brillenfassung Brillengläser enthalten oder ohne Brillengläser vorliegen. Sind keine Brillengläser in der Brillenfassung enthalten, können die Brillengläser innerhalb der Brillenfassung anhand vereinfachter Annahmen angenähert werden, z. B. als Ebenen oder Flächen höherer Ordnung. Es kann auch ein Modell der Brillenfassung, z. B. ein CAD-Modell, vorliegen. Dieses Modell kann an die zuvor z. B. mittels eines 3D-Rekonstruktions- oder Tiefenschätzungsverfahren bestimmten Koordinaten der Brillenfassung angepasst werden, um die Form, Position und Lage der Brillenfassung mit höherer Genauigkeit bestimmen zu können.

3D-Rekonstruktions-Verfahren und Tiefenschätzungsverfahren sind z. B. im Buch "Multiple View Geometry" von R. Hartley und A. Zisserman, Cambridge University Press 2004, in Kapitel 10 "3D reconstruction of cameras and structure" und in Kapitel 18 "N-view computional methods" dargestellt, auf das hiermit vollumfänglich Bezug genommen und deren Offenbarungsgehalt in die Beschreibung dieser Erfindung mit einbezogen wird.

Für die Erzeugung der Brillenfassungsinformationsdaten ist es von Vorteil, wenn die Brillenfassung zuvor in der wenigstens einen ersten Abbildung, bevorzugt den wenigstens zwei ersten Abbildungen und in den wenigstens zwei zweiten Abbildungen, die eine Brillenfassung enthalten, segmentiert wird. Dies ermöglicht eine genauere Berechnung der Koordinaten der Brillenfassung sowie deren Position und Lage im Raum und spart zusätzlich Rechenzeit. Als Segmentierung bezeichnet die Erfindung die Erzeugung von einer oder mehreren inhaltlich zusammenhängenden Regionen durch Zusammenfassung benachbarter Pixel entsprechend einem bestimmten Homogenitätskriterium, z. B. nach semantischen Kriterien. In diesem Fall werden alle Pixel der jeweiligen Abbildung bestimmt, die zu einem Bild der Brillenfassung gehören.

In dem vorstehend angegebenen Verfahren zum Vermessen der lokalen Brechkraft und/oder der Brechkraftverteilung eines linken und/oder eines rechten Brillenglases wird bevorzugt eine Vielzahl von Strukturpunkten des i) vorderen Augenabschnitts des linken und/oder rechten Auges oder ii) des vorderen Augenabschnitts des linken und/oder rechten Auges und eines Teils des Gesichts oder iii) des vorderen Augenabschnitts des linken und/oder rechten Auges und eines Teils des Gesichts mit Brillenfassung in Trageposition jeweils in den ersten und in den zweiten Abbildungen des Kopfes, vorzugsweise des Gesichts, des Brillenträgers aus jeweils wenigstens einer Aufnahmeposition erfasst und es werden die vorstehend beschriebenen Verfahrensschritte für diese Vielzahl von Strukturpunkten durchgeführt. Bevorzugt werden wenigstens eine erste Abbildung und wenigstens zwei zweite Abbildungen des Kopfes, vorzugsweise des Gesichts, des Brillenträgers, besonders wenigstens zwei erste Abbildungen und wenigstens zwei zweite Abbildungen des Kopfes, vorzugsweise des Gesichts, des Brillenträgers erfasst. Die Vielzahl von Strukturpunkten der wenigstens einen ersten Abbildung, bevorzugt der wenigstens zwei ersten Abbildungen sind bevorzugt identisch zu der Vielzahl der Strukturpunkte der wenigstens zwei zweiten Abbildungen. Unter einer Vielzahl von Strukturpunkten werden dabei vorliegend mindestens drei, bevorzugt wenigstens 10, weiter bevorzugt wenigstens 100, besonders bevorzugt wenigstens 1000 und ganz besonders bevorzugt wenigstens 10000 Strukturpunkte verstanden. Insbesondere ist eine Vielzahl von Strukturpunkten $\geq 100$ Strukturpunkte und $\leq 1000$ Strukturpunkte günstig, weil damit ein guter Kompromiss zwischen einer Genauigkeit von gemessenen lokalen Brechkräften und einem erforderlichen Berechnungsaufwand gebildet wird.

Indem die lokale Brechkraft an einer Vielzahl von unterschiedlichen Stellen des linken und/oder rechten Brillenglases vermessen wird, kann nicht nur eine lokale Brechkraft, sondern eine Brechkraftverteilung eines linken und/oder eines rechten Brillenglases vermessen oder angegeben werden.

Eine vorteilhafte Ausführungsform der Erfindung sieht vor, dass für das Berechnen der Koordinaten des wenigstens einen Strukturpunkts, bevorzugt der wenigstens zwei Strukturpunkte, jeweils des i) vorderen Augenabschnitt des linken Auges oder des ii) vorderen Augenabschnitt des linken Auges und eines Teils des Gesichts oder des iii) vorderen Augenabschnitt des linken Auges und eines Teils des Gesichts mit Brillenfassung in Trageposition und/oder für das Berechnen der Koordinaten des wenigstens einen Strukturpunkts des i) vorderen Augenabschnitts des rechten Auges oder des ii) vorderen Augenabschnitt des rechten Auges und eines Teils des Gesichts oder des iii) vorderen Augenabschnitt des rechten Auges und eines Teils des Gesichts mit Brillenfassung in Trageposition und/oder für das Berechnen der lokalen Brechkraft und/oder der Brechkraftverteilung aus den Strukturpunkten der ersten Abbildungen Feature-Detektions-Verfahren zur Detektion der Bilder geeigneter Strukturpunkte und Feature-Matching-Verfahren zur Detektion des Bilds korrespondierender Strukturpunkte in den ersten und den zweiten Abbildungen verwendet werden, bevorzugt der wenigstens einen ersten Abbildung und der wenigstens zwei zweiten Abbildungen, besonders bevorzugt der wenigstens zwei ersten Abbildungen und der wenigstens zwei zweiten Abbildungen.

Zur Detektion der Bilder geeigneter Strukturpunkte können Feature-Detektions-Verfahren zur Anwendung kommen. Diese detektieren Merkmale in Bildern, die aufgrund ihrer lokalen Umgebung markant und deshalb leicht wiederzuerkennen sind. Zu einem Merkmal werden sogenannte Features - Featurevektoren oder -deskriptoren - berechnet, die das Merkmal möglichst kurz und prägnant beschreiben. Beispiele für solche Verfahren sind z. B. gradientenbasierte Feature-Deskriptoren wie SIFT und SURF Features oder binäre Feature-Deskriptoren wie BRIEF, FAST, ORB oder BRISK Features. Die Verwendung eines Feature-Detektions-Verfahrens hat den Vorteil, dass die Bilder besonders unterscheidungskräftiger Strukturpunkte für die Berechnung der Koordinaten der Strukturpunkte des i) linken und/oder rechten Augenabschnitts oder des ii) linken und/oder rechten Augenabschnitts und jeweils eines Teils des Gesichts oder des iii) linken und/oder rechten Augenabschnitts und jeweils eines Teils des Gesichts mit Brillenfassung herangezogen werden, wodurch die Genauigkeit des Verfahrens erhöht wird.

Feature-Matching-Verfahren werden verwendet, um zu einem Merkmal Kandidaten in anderen Bildern zu finden, die mit hoher Wahrscheinlichkeit Abbildungen desselben Merkmals sind. Diese Verfahren sind deshalb in der Lage, unter den in den verschiedenen ersten und weiteren Abbildungen detektierten Bildern von Strukturpunkten diejenigen zu finden, die zu demselben Strukturpunkt im Raum gehören. Dafür werden Ähnlichkeitsmaße definiert, die aussagen, wie ähnlich zwei Features einander sind. Wird z. B. ein bestimmter Ähnlichkeits-Schwellwert überschritten, so werden die zugehörigen Features als Kandidaten für ein "Matching", also für ein Abbild desselben Features, klassifiziert. Da in Bildern meist sehr viele Features detektiert werden, ist eine effiziente Implementierung der Ähnlichkeitsmaße z. B. mittels Baumstrukturen sinnvoll, um die Laufzeit zu reduzieren. Die Verwendung eines Feature-Matching-Verfahrens hat den Vorteil, dass die detektierten Features in den verschiedenen Aufnahmen besonders effizient und mit hoher Genauigkeit einander zugeordnet werden können, was die Genauigkeit des Verfahrens erhöht und Rechenzeit einspart.

Feature-Detektions-Verfahren und Feature-Matching-Verfahren sind z. B. in dem Buch "Visual Object Recognition" von K. Graumann und B. Laibe, Morgan & Claypool Publishers, 2011, Seiten 11 bis 40, beschrieben, auf das hiermit vollumfänglich Bezug genommen und deren Offenbarung in die Beschreibung dieser Erfindung einbezogen wird.

Um aus den Matchings der Features in den verschiedenen Aufnahmen bzw. Abbildungen auf die Koordinaten der Strukturpunkte schließen zu können, ist die Kenntnis intrinsischer und extrinsischer Parameter der wenigstens einen Bilderfassungseinrichtung erforderlich. Für das Berechnen der Koordinaten können z. B. Tiefenschätzungs- oder 3D-Rekonstruktionsverfahren verwendet werden.

Um passende Bilder von Strukturpunkten des i) vorderen Augenabschnitts des linken und/oder rechten Auges oder des ii) vorderen Augenabschnitts des linken und/oder rechten Auges und jeweils eines Teils des Gesichts oder iii) vorderen Augenabschnitts des linken und/oder rechten Auges und jeweils eines Teils des Gesichts mit Brillenfassung in Trageposition zu finden, ist es von Vorteil, wenn i) der vordere Augenabschnitt des linken und/oder rechten Auges oder ii) der vordere Augenabschnitt des linken und/oder rechten Auges und jeweils eines Teils des Gesichts oder iii) der vordere Augenabschnitt des linken und/oder rechten Auges und jeweils eines Teils des Gesichts mit Brillenfassung in Trageposition in den verschiedenen ersten und zweiten Abbildungen segmentiert wird. Der Suchbereich für geeignete Strukturpunkte kann auf diese Weise auf die segmentierte Region des i) vorderen Augenabschnitts des linken und/oder rechten Auges oder des ii) vorderen Augenabschnitts des linken und/oder rechten Auges und jeweils eines Teils des Gesichts oder des iii) vorderen Augenabschnitts des linken und/oder rechten Auges und jeweils eines Teils des Gesichts mit Brillenfassung in Trageposition beschränkt werden. Diese Maßnahme erhöht die Genauigkeit des Verfahrens, indem falsche Detektionen außerhalb des i) vorderen Augenabschnitts oder des ii) vorderen Augenabschnitts und eines Teils des Gesichts oder des iii) vorderen Augenabschnitts und eines Teils des Gesicht mit Brillenfassung in Trageposition jeweils vermieden werden, und spart zusätzlich Rechenzeit ein, da nur der segmentierte Bereich durchsucht werden muss.

Zu bemerken ist, dass die wenigstens eine erste Abbildung, bevorzugt die wenigstens zwei ersten Abbildungen, und die wenigstens zwei zweiten Abbildungen mittels wenigstens einer Bilderfassungseinrichtung erfasst werden können, die relativ zu dem Kopf, vorzugsweise zu dem Gesicht, des Brillenträgers verlagert wird, indem die Bilderfassungseinrichtung und/oder der Kopf, vorzugsweise das Gesicht, des Brillenträgers bewegt wird.

Dabei sind mehrere Alternativen denkbar. Bevorzugt werden die Aufnahmen mit einer einzigen verlagerbaren Bilderfassungseinrichtung erfasst, die vor dem Kopf, vorzugsweise dem Gesicht, des Brillenträgers entlang einer Trajektorie bewegt wird. Dies hat zwei Vorteile: Zum einen sind die Aufnahmen dann nämlich mit geringem operativem Aufwand kostengünstig erfassbar, da eine einzige Bilderfassungseinrichtung ausreicht. Zum anderen können die Aufnahmen von dem Brillenträger selbst grundsätzlich an einem beliebigen Ort erfasst werden ohne dass ein Gang zum Optiker notwendig ist, was den Bestellvorgang wesentlich erleichtert.

Die wenigstens eine Bilderfassungseinrichtung kann z. B. in eine von Hand gehaltene Vorrichtung integriert sein, z. B. in ein Smartphone oder in einen Tablet-Computer oder in eine Kamera. Diese kann z. B. vom Brillenträger selbst oder von einer anderen Person gehalten werden. Von Vorteil ist es, wenn die von Hand gehaltene Vorrichtung Lagesensoren aufweist, die Lagesignale bereitstellen, die ein Ausrichten der wenigstens einen Bilderfassungseinrichtung auf den Kopf, vorzugsweise auf das Gesicht, des Brillenträgers unterstützen können. Zu bemerken ist, dass es auch möglich ist, wenigstens eine ortsfeste unbewegliche Bilderfassungseinrichtung zu verwenden, relativ zu der der Brillenträger den Kopf, vorzugsweise das Gesicht, bewegt. Das hat den Vorteil, dass auch größere feststehende Messgeräte, z. B. für ein Geschäft, mit nur einer oder wenigstens einer Bilderfassungseinrichtung hergestellt werden können. Dies spart Platz, insbesondere, wenn die wenigstens zwei Bilderfassungseinrichtungen den Kopf, vorzugsweise das Gesicht, aus stark unterschiedlichen Aufnahmepositionen heraus erfassen, und ist kostengünstig.

Schließlich ist es auch denkbar, mehrere, bevorzugt wenigstens zwei Bilderfassungseinrichtungen für die Abbildungen aus verschiedenen Aufnahmepositionen relativ zum Kopf, vorzugsweise relativ zum Gesicht, zu verwenden. Diese können entweder ortsfest an unterschiedlichen Stellen im Raum angebracht sein oder relativ zu dem Kopf, vorzugsweise relativ zu dem Gesicht, des Brillenträgers entlang von Trajektorien bewegt werden. Der Vorteil der Verwendung mehrerer Bilderfassungseinrichtungen, bevorzugt wenigstens zwei Bilderfassungseinrichtungen, weiter bevorzugt einer Vielzahl von Bilderfassungseinrichtungen an verschiedenen Positionen im Raum, liegt in einer höheren Genauigkeit des Verfahrens, da bekannte Relationen zwischen der Position und Lage der Bilderfassungseinrichtungen die Berechnung der extrinsischen Parameter der Bilderfassungseinrichtung, insbesondere der extrinsischen Kameraparameter, erleichtern oder sogar überflüssig machen. Insbesondere die Berechnung von Koordinaten zu Strukturpunkten des Kopfes, insbesondere des i) vorderen Augenabschnitts des linken und/oder rechten Auges oder des ii) vorderen Augenabschnitts des linken und/oder rechten Auges und jeweils eines Teils des Gesichts oder des iii) vorderen Augenabschnitts des linken und/oder rechten Auges und jeweils eines Teils des Gesichts mit getragener Brillenfassung, sowie der Koordinaten der Brillenfassung wird dadurch robuster und einfacher. Auch wird durch die Verwendung mehrerer, bevorzugt wenigstens zwei, Bilderfassungseinrichtungen Rechenzeit eingespart, da im Optimalfall die Berechnung der intrinsischen und/oder extrinsischen Parameter der Bilderfassungseinrichtungen im Vorfeld des Verfahrens erfolgen kann und auch nur einmal durchgeführt werden muss.

Es ist auch denkbar, eine Film- oder Videosequenz des Kopfes, vorzugswiese des Gesichts, anhand einer oder mehrerer, bevorzugt wenigstens zwei, Bilderfassungseinrichtungen und/oder bei Drehung des Kopfes, vorzugsweise des Gesichts, aufzunehmen. Das hat den Vorteil, dass eine Vielzahl von ersten und zweiten Abbildungen zu einer Vielzahl von unterschiedlichen Aufnahmepositionen verfügbar ist, die nur gering voneinander abweichen. Dadurch kann die Genauigkeit des Verfahrens verbessert werden.

Unter einer Bilderfassungseinrichtung versteht die Erfindung eine Einrichtung für das digitale Erfassen von Bildern. Eine Bilderfassungseinrichtung kann z. B. ein Bestandteil einer digitalen Kamera sein. Eine Bilderfassungseinrichtung im Sinne der Erfindung kann allerdings z. B. auch ein Bestandteil eines mobilen Endgeräts, wie eines Mobiltelefons, eines Smartphones oder eines Tablet-Computers, einer Stereokamera, einer plenoptischen Kamera oder einer Multikamera sein. Eine Bilderfassungseinrichtung im Sinne der Erfindung hat eine Bildebene und enthält vorzugsweise einen Bildsensor-Chip mit wenigstens einem Objektiv.

Eine erfindungsgemäße Vorrichtung zum Vermessen der lokalen Brechkraft und/oder der Brechkraftverteilung eines linken und/oder rechten Brillenglases kann insbesondere als ein mobiles Endgerät ausgebildet sein, das eine digitale Kamera oder mehrere, wenigstens zwei, digitale Kameras enthält.

Indem für das Vermessen der lokalen Brechkraft und/oder der Brechkraftverteilung eines Brillenglases ein mobiles Endgerät mit wenigstens zwei Bilderfassungseinrichtungen eingesetzt wird, z. B. ein Smartphone mit wenigstens zwei digitalen Kameras, ein Tablet-Computer mit wenigstens zwei digitalen Kameras, zwei digitale Kameras mit jeweils einer Bilderfassungseinrichtung, eine Stereokamera mit zwei Bilderfassungseinrichtungen, eine Multikamera mit mehreren Bilderfassungseinrichtungen, ein Kamerachip mit wenigstens zwei Objektiven oder eine plenoptische Kamera eingesetzt wird, ergeben sich insbesondere folgende Vorteile:

Für die Bestimmung der lokalen Brechkraft und/oder Brechkraftverteilung eines rechten Brillenglases kann es ausreichend sein, mit jeder Bilderfassungseinrichtung eine einzige erste Abbildung des Kopfes, vorzugsweise des Gesichts, mit i) einem vorderen Augenabschnitt eines rechten Auges oder mit ii) einem vorderen Augenabschnitt eines rechten Auges und eines Teils des Gesichts oder mit iii) einem vorderen Augenabschnitt eines rechten Auges und eines Teils des Gesichts mit Brillenfassung in Trageposition, jeweils mit wenigstens einem Strukturpunkt darin zu erfassen, wobei das rechte Auge eine zu der Aufnahmeposition weisende Blickrichtung hat und wobei ein den wenigstens einen Strukturpunkt abbildender Abbildungsstrahlengang das rechte Brillenglas durchsetzt, und mit jeder Bilderfassungseinrichtung eine einzige zweite Abbildung des Kopfes, vorzugsweise des Gesichts, mit i) einem vorderen Augenabschnitt eines rechten Auges oder mit ii) einem vorderen Augenabschnitt eines rechten Auges und eines Teils des Gesichts oder mit iii) einem vorderen Augenabschnitt eines rechten Auges und eines Teils des Gesichts mit Brillenfassung in Trageposition, jeweils mit wenigstens einem identischen Strukturpunkt, jeweils ohne das rechte Brillenglas der Brillenfassung oder ohne die Brillenfassung, enthaltend das rechte Brillenglas, zu erfassen, wobei der dem Bild des wenigstens einen Strukturpunkts des i) vorderen Augenabschnitts des rechten Auges oder des ii) vorderen Augenabschnitts des rechten Auges und eines Teils des Gesichts oder des iii) vorderen Augenabschnitts des rechten Auges und eines Teils des Gesichts mit Brillenfassung in Trageposition, jeweils zugrundeliegende Abbildungsstrahlengang bei dem Erfassen weder das linke noch das rechte Brillenglas in der Brillenfassung durchsetzt. Entsprechendes gilt für die Bestimmung der lokalen Brechkraft und/oder Brechkraftverteilung eines linken Brillenglases. Bei Vorhandensein von wenigstens zwei Bilderfassungseinrichtungen wird unter einer zu der Aufnahmeposition weisenden Blickrichtung die Fixierung eines beliebigen und ortsfesten Punkts auf dem mobilen Endgerät, der Stereokamera, der Multikamera, des Kamerachips oder der plenoptische Kamera verstanden. Bei Erfassen der einen einzigen zweiten Abbildung kann die Blickrichtung identisch oder verschieden zu der Blickrichtung bei Erfassen der einen einzigen ersten Abbildung sein. Bevorzugt ist die Blickrichtung identisch. Auch bei verschiedenen Blickrichtungen ist eine Rekonstruktion des wenigstens einen Strukturpunkts möglich.

Zur Erhöhung der Genauigkeit des Verfahrens gemäß Anspruch 1 werden auch bei Verwendung von wenigstens zwei Bilderfassungseinrichtungen bevorzugt wenigstens zwei erste solche Abbildungen und wenigstens zwei zweite solche Abbildungen erstellt.

Eine vorteilhafte Ausführungsform der Erfindung sieht vor, dass eine Vielzahl, bevorzugt wenigstens drei, erster Abbildungen des Kopfes, vorzugsweise des Gesichts, mit i) einem linken und/oder rechten vorderen Augenabschnitt oder ii) einem linken und/oder rechten vorderen Augenabschnitt und jeweils eines Teils des Gesichts oder iii) einem linken und/oder rechten vorderen Augenabschnitt und jeweils eines Teils des Gesichts mit Brillenfassung in Trageposition, jeweils inklusive des linken und/oder rechten Brillenglases, dessen lokale Brechkraft und/oder Brechkraftverteilung ermittelt werden soll und das sich bevorzugt in einer Brillenfassung befindet, und dass eine Vielzahl, bevorzugt wenigstens drei, zweiter Abbildungen des Kopfes, vorzugsweise des Gesichts, mit i) einem linken und/oder rechten vorderen Augenabschnitt oder ii) einem linken und/oder rechten vorderen Augenabschnitt oder und jeweils eines Teils des Gesichts oder iii) einem linken und/oder rechten vorderen Augenabschnitt und jeweils eines Teils des Gesichts mit Brillenfassung in Trageposition, jeweils ohne das linke und/oder rechte Brillenglas erfasst werden.

Bei Aufnahme der Vielzahl zweiter Abbildungen, bevorzugt bei Aufnahme der wenigstens drei zweiten Abbildungen, kann die Brillenfassung vom Kopf, vorzugsweise aus dem Gesicht, entfernt werden. Für die Erfassung einer Vielzahl, bevorzugt wenigstens drei, erster Abbildungen des Kopfs des Brillenträgers und einer Vielzahl, bevorzugt wenigstens drei, zweiter Abbildungen des Kopfs, vorzugsweise des Gesichts, des Brillenträgers ist es von Vorteil, wenn diese wenigstens einen Teil einer Hemisphäre oder eine Hemisphäre jeweils um den Kopf herum aufspannen oder eine Vielzahl von Beobachtungsrichtungen oder Beobachtungsabständen, bevorzugt wenigstens drei Beobachtungsrichtungen oder Beobachtungsabstände, einnehmen.

Indem eine Vielzahl von, bevorzugt von wenigstens drei, Abbildungen des Kopfs, vorzugsweise des Gesichts, des Brillenträgers mit und ohne Brillenfassung und mit und ohne darin aufgenommenen Brillengläsern erfasst werden, kann die Genauigkeit des Verfahrens zum Vermessen der lokalen Brechkraft und/oder der Brechkraftverteilung eines linken und/oder eines rechten Brillenglases, vorzugsweise in einer Brillenfassung, erhöht werden.

Indem mittels wenigstens einer Bilderfassungseinrichtung eine Vielzahl von Abbildungen, bevorzugt von wenigstens drei Abbildungen, der Szene, bevorzugt des i) vorderen Augenabschnitts oder des ii) vorderen Augenabschnitts und eines Teils des Gesichts oder des iii) vorderen Augenabschnitts und eines Teils des Gesichts mit Brillenfassung in Trageposition, unter Verlagerung der wenigstens einen Bilderfassungseinrichtung oder bei ortsfester wenigstens einer Bilderfassungseinrichtung unter Drehung des Kopfes, bevorzugt des Gesichts, erfasst werden, wobei die Blickrichtung des linken Auges und/oder des rechten Auges des Brillenträgers zu der jeweiligen Aufnahmeposition weist und aus der Vielzahl, wenigstens drei, von dabei erfassten Abbildungen Durchblickstrahlengänge für verschiedene Durchblickrichtungen des linken Auges und/oder des rechten Auges des Brillenträgers der Brillenfassung durch das linke Brillenglas und/oder das rechte Brillenglas berechnet werden und für eine jede Durchblickrichtung eine lokale Brechkraft $k(x, y)$ des linken Brillenglases und/oder des rechten Brillenglases bestimmt wird, ist es möglich, zu einer Blickrichtung des Brillenträgers die lokale Brechkraft und/oder die Brechkraftverteilung der Brillengläser in der von dem Brillenträger getragenen Brillenfassung zu bestimmen.

Die Vermessung der lokalen Brechkraft und/oder Brechkraftverteilung eines linken und eines rechten Brillenglases in einer Brillenfassung erlaubt insbesondere Aussagen über sogenannte binokulare Wirkungen einer Brille, d. h. einer Brillenfassung inklusive beider Brillengläser. Unter einer binokularen Wirkung ist die Beurteilung der dioptrischen oder fokussierenden Wirkung des linken und rechten Brillenglases für eine bestimmte Blickrichtung zu verstehen. Eine binokulare Wirkung kann auch Abbildungsfehler des Brillenglases, die höherer Ordnung sind, wie z. B. Koma oder auch prismatische Fehler, umfassen.

Die Vermessung der lokalen Brechkraft und/oder der Brechkraftverteilung eines linken und eines rechten Brillenglases in einer Brillenfassung ermöglicht zu erkennen, ob bei einer bestimmten Blickrichtung, z. B. die astigmatische Wirkung umfassend die Differenz der Brechkraft in den Hauptschnitten und deren Richtung, des Brillenglases signifikant von den binokularen Zielwerten abweicht. Unter den binokularen Zielwerten ist hierbei die subjektiv ermittelte Refraktion, umfassend Sphäre, Zylinder mit Achse sowie Prisma mit Basislage, beider Augen zu verstehen. Für den Brillenträger ist eine Abweichung von den binokularen Zielwerten nicht oder nur wenig bemerkbar, wenn z. B. die Abweichung der astigmatischen Wirkung des linken und rechten Brillenglases von den binokularen Zielwerten gleich ist. Für den Brillenträger ist diese Abweichung von den binokularen Zielwerten jedoch deutlich bemerkbar, wenn die Abweichung der astigmatischen Wirkung des linken und rechten Brillenglases von den binokularen Zielwerten verschieden ist.

Eine nicht korrekte prismatische Wirkung zwischen dem rechten und linken Brillenglas ist für einen Brillenträger sehr unangenehm. Eine nicht korrekte nasale prismatische Wirkung wird von einem Brillenträger eher akzeptiert als eine nicht korrekte temporale prismatische Wirkung und/oder eine nicht korrekte höhenprismatische Wirkung. Das vorstehend angegebene Verfahren ermöglicht durch die gleichzeitige Vermessung eines rechten und linken Brillenglases die Abweichung der prismatischen Wirkung des linken und rechten Brillenglases in der Tragesituation von einem binokularen Zielwert zu bestimmen.

Die Erfindung beruht insbesondere auf dem Gedanken, dass das Aufnehmen einer Vielzahl von Abbildungen, insbesondere das Aufnehmen einer Film- bzw. Videosequenz, mit wenigstens einer Bilderfassungseinrichtung aus unterschiedlichen Aufnahmepositionen und/oder Aufnahmerichtungen heraus das Berechnen extrinsischer Parameter der Bilderfassungseinrichtung und/oder von Koordinaten von Strukturpunkten des Kopfes, vorzugsweise des Gesichts, mittels Bildverarbeitung z. B. unter Verwendung von SLAM-Algorithmen, d. h. Algorithmen für das gleichzeitige Lokalisieren und Abbilden (Simultaneous Localization and Mapping) ermöglicht, wie dies in der Publikation "A. Teichmann et al., Unsupervised intrinsic calibration of depth sensors via SLAM, Robotics: Science and Systems 2013, Berlin Germany, June 24 - 28, 2013" beschrieben ist, auf die hiermit vollumfänglich Bezug genommen und deren Offenbarung in die Beschreibung dieser Erfindung einbezogen wird.

Ein SLAM-Algorithmus ermöglicht insbesondere, aus Abbildungen ein- und derselben Szene, hier des Kopfes, vorzugsweise des Gesichts, des Brillenträgers, die aus verschiedenen Aufnahmepositionen erfasst sind und die deshalb die Szene aus unterschiedlichen Perspektiven zeigen, sowohl eine dreidimensionale Geometrie der Szene als auch die Positionen der wenigstens einen Bilderfassungseinrichtung zu berechnen, die diese beim Erfassen von Abbildungen der Szene jeweils eingenommen hat. Ein SLAM-Algorithmus umfasst eine Feature-Detektions-Routine, die in der Szene vorhandene Merkmale, hier für jeden Strukturpunkt, detektiert, und eine Feature-Matching-Routine, mittels der für jedes Merkmal in einer Aufnahme das korrespondierende Merkmal in den aus unterschiedlichen Aufnahmepositionen aufgenommenen Bildern wiedererkannt wird. Aus den korrespondierenden Positionen jedes Merkmals in den Bildaufnahmen wird dann anhand der intrinsischen und extrinsischen Parameter der wenigstens einen Bilderfassungseinrichtung ein dreidimensionales Modell der Szene erstellt.

Die Genauigkeit solcher SLAM-Algorithmen, insbesondere eines SLAM-Algorithmus, welcher die extrinsischen Parameter der wenigstens einen Bilderfassungseinrichtung und/oder die Position der Strukturpunkte in der Abbildung berechnet, ist von der Genauigkeit der Kalibrierung der wenigstens einen Bilderfassungseinrichtung bestimmt. Eine solche Kalibrierung ist in der Lage, jeder Pixelkoordinate der wenigstens einen Bilderfassungseinrichtung einen dreidimensionalen, in die jeweilige Bilderfassungseinrichtung einfallenden Abbildungsstrahlengang zuzuordnen.

Unter einer Kalibrierung einer Bilderfassungseinrichtung versteht die Erfindung das Ermitteln ihrer intrinsischen und/oder extrinsischen Parameter.

Unter den intrinsischen Parametern einer Bilderfassungseinrichtung versteht die Erfindung die Brennweite $f$, die Koordinaten des Bildzentrums $Z_x$ und $Z_y$, den Scherungsparameter $s$ sowie die Skalierungsparameter $m_x$ und $m_y$ aufgrund unterschiedlich skalierter Koordinatenachsen der Bildebene. Mathematisch lassen sich die intrinsischen Parameter als ein intrinsischer Kalibrierungsoperator $\overline{K}$ ausdrücken

$$\overline{K} = \begin{pmatrix} f \cdot m_x & s & Z_x \cdot m_x \\ 0 & f \cdot m_y & Z_y \cdot m_y \\ 0 & 0 & 1 \end{pmatrix}.$$

Zu den intrinsischen Parametern können zusätzlich auch Verzerrungsparameter gezählt werden, die zur Bestimmung von Bildverzerrungen, insbesondere der radialen und tangentialen Verzerrung, dienen. Die intrinsischen Parameter beschreiben, wie eine Koordinate im Koordinatensystem einer Bilderfassungseinrichtung auf die zugehörige Bildebene abgebildet wird bzw. wie aus einem gegebenen Punkt auf der Bildebene der zugehörige Abbildungsstrahlengang im Koordinatensystem der Bilderfassungseinrichtung berechnet werden kann.

Die intrinsischen Parameter der wenigstens einen Bilderfassungseinrichtung, d. h. der Kamerakalibrierungsoperator $\overline{K}$, kann z. B. aus wenigstens zwei Abbildungen eines speziellen Kalibriermusters, z. B. eines Schachbrettmusters oder eines Punktemusters mittels der wenigstens einen Bilderfassungseinrichtung bestimmt werden. Alternativ hierzu ist es auch möglich, durch Auswerten einer Vielzahl von Abbildungen wenigstens einer Szene direkt aus der Vielzahl von Abbildungen der Szene, denen unterschiedliche Aufnahmepositionen zugrunde liegen können, den intrinsischen Kamerakalibrierungsoperator $\overline{K}$ zu bestimmen. Für das Berechnen intrinsischer Parameter der Bilderfassungseinrichtung kann also auch ein SLAM-Algorithmus verwendet werden. Dies hat den Vorteil, dass keine umständlichen Kalibrierverfahren vor dem Einsatz der Bilderfassungseinrichtung durchgeführt werden müssen, um diese Parameter zu bestimmen. Stattdessen können diese direkt bei der Ausführung des SLAM-Algorithmus mitgeschätzt werden. Dies spart Aufwand und Rechenzeit.

Unter den extrinsischen Parametern einer Bilderfassungseinrichtung versteht die Erfindung die Position und Lage der Bilderfassungseinrichtung im Raum relativ zu einem festen Bezugskoordinatensystem. Die Position bezeichnet dabei den Punkt im Raum in Bezug auf das Bezugskoordinatensystem, an dem sich das Zentrum der Bilderfassungseinrichtung befindet. Die Lage bezeichnet die Rotation der Bilderfassungseinrichtung wiederum in Bezug auf das Bezugskoordinatensystem. Das Bezugskoordinatensystem kann z. B. durch die Position und Lage einer Bilderfassungseinrichtung bei einer der Aufnahmen gegeben sein oder auch durch einen Punkt des Kopfes des Brillenträgers zusammen mit einer Ausrichtung, die durch weitere Punkte des Kopfes bestimmt sein kann, oder durch einen Punkt und einen Abschnitt der Brillenfassung auf dem Kopf.

Die Lage einer Bilderfassungseinrichtung wird dabei durch einen Rotationsoperator

$$\overline{R} = \begin{pmatrix} R_{11} & R_{12} & R_{13} \\ R_{21} & R_{22} & R_{23} \\ R_{31} & R_{32} & R_{33} \end{pmatrix}$$

mit

$$\det \overline{R} = 1,$$

der die Rotation der Bilderfassungseinrichtung um das Kamerazentrum relativ zu dem Bezugskoordinatensystem festlegt, beschrieben. Die Position einer Bilderfassungseinrichtung wird durch einen Translationsvektor

$$\vec{T} = \begin{pmatrix} t_1 \\ t_2 \\ t_3 \end{pmatrix},$$

der die Verschiebung des Kamerazentrums relativ zu dem Ursprung des Bezugskoordinatensystems festlegt, beschrieben. Eine Koordinate c im Raum wird durch die Abbildungsvorschrift

$$f(c) = \overline{K} \cdot (\overline{R} \cdot c + \overline{T})$$

und der Berechnung der zugehörigen zwei-dimensionalen inhomogenen Koordinaten mittels Division des Ergebnisvektors durch seine dritte Koordinate auf den entsprechenden Punkt auf der Bildebene der Bilderfassungseinrichtung abgebildet.

Umgekehrt kann zu einer Koordinate y in homogenen Koordinaten auf der Bildebene der Bilderfassungseinrichtung anhand der Abbildungsvorschrift

$$g(y) = \overline{R}^{\mathrm{T}} \cdot (\overline{K}^{-1} \cdot y - \overline{T})$$

der zugehörige Abbildungsstrahlengang bestimmt werden, der auf diese Koordinate abgebildet wird.

Intrinsische und extrinsische Parameter einer Bilderfassungseinrichtung, zugehörige Abbildungsvorschriften sowie die Kalibrierung von Bilderfassungseinrichtungen sind im Detail in dem Buch "Multiple View Geometry" von R. Hartley und A. Zisserman, Cambridge University Press 2004, Seiten 153 bis 193, erläutert.

Aus der Vielzahl von, bevorzugt von wenigstens drei, Abbildungen des Kopfes, vorzugsweise des Gesichts, werden dann Koordinaten des wenigstens einen Strukturpunkts des Kopfes, vorzugsweise des Gesichts, der Brillenfassung sowie extrinsische Parameter der wenigstens einen Bilderfassungseinrichtung für eine jede erfasste Abbildung bestimmt. Daraus werden dann Strahlengänge durch die Brillengläser ermittelt, um aus deren Ablenkung durch das linke und/oder rechte Brillenglas dann die lokale Brechkraft und/oder die Brechkraftverteilung des linken und/oder rechten Brillenglases zu bestimmen.

Eine vorteilhafte Weiterbildung der Erfindung sieht deshalb vor, dass für das Berechnen der Koordinaten der Strukturpunkte des Kopfes, vorzugsweise des Gesichts, und/oder extrinsischer Parameter der wenigstens einen Bilderfassungseinrichtung umfassend deren Position und Lage im Raum bei dem Erfassen der wenigstens einen ersten, bevorzugt zwei ersten und/oder wenigstens zwei zweiten Abbildungen ein SLAM-Algorithmus verwendet wird.

Durch die Verwendung eines SLAM-Algorithmus können intrinsische und/oder extrinsische Parameter der wenigstens einen Bilderfassungseinrichtung und/oder die Koordinaten zu den Strukturpunkten des Kopfes, vorzugsweise des Gesichts, mit höherer Genauigkeit und auch unter Einsparung von Rechenzeit ermittelt werden. Die Genauigkeit der Berechnungen kann z. B. durch den Einsatz von "Bundle Adjustment" Verfahren erhöht werden.

Mittels der vorstehend beschriebenen Kalibrierung kann der SLAM-Algorithmus jedem Bild eines Strukturpunkts in den zweiten Abbildungen eine Vielzahl von dreidimensionalen, in die jeweilige Bilderfassungseinrichtung einfallenden Abbildungsstrahlengänge zuordnen, die kein Brillenglas passieren. Aus diesen können dann die Koordinaten der Strukturpunkte des i) linken und/oder rechten vorderen Augenabschnitts oder ii) linken und/oder rechten vorderen Augenabschnitts und jeweils eines Teils des Gesichts oder iii) linken und/oder rechten vorderen Augenabschnitts und jeweils eines Teils des Gesichts mit Brillenfassung in Trageposition und/oder von Strukturpunkten des übrigen Kopfes bestimmt werden. Aus den erfassten ersten Abbildungen der Strukturpunkte, welche durch das rechte und/oder linke Brillenglas von der wenigstens einen Bilderfassungseinrichtung beobachtet wurden, den aus den zweiten Aufnahmen berechneten Koordinaten, die jeweils anhand der angenommenen Blickrichtung des Brillenträgers zu einer ersten Aufnahme korrigiert werden, lässt sich eine Vielzahl von Abbildungsstrahlengängen bestimmen, welche das rechte und/oder linke Brillenglas an einem Ort der Brechung durchsetzen. Das so aufgespannte Strahlenmodell wird bevorzugt verwendet, um die lokale Brechkraft oder die Brechkraftverteilung des linken und/oder rechten Brillenglases zu ermitteln.

Die lokale Brechkraft oder die Brechkraftverteilung der Brillengläser für den Brillenträger lässt sich beschreiben als die Ableitung der räumlichen Strahlablenkungen in dem Strahlenmodell. Um die lokale Brechkraft in der Nähe eines Orts der Brechung auf dem Brillenglas zu bestimmen, kann deshalb ein lokales Gradientenfeld aus der Ablenkung der Strahlengänge durch das Brillenglas berechnet werden.

Eine vorteilhafte Weiterbildung der Erfindung sieht deshalb vor, dass die lokale Brechkraft des linken Brillenglases aus der Ableitung eines Gradientenfelds, das aus der Ablenkung des Abbildungsstrahlengangs für das Bild des wenigstens einen Strukturpunkts des i) vorderen Augenabschnitts des linken Auges oder ii) vorderen Augenabschnitts des linken Auges und jeweils eines Teils des Gesichts oder iii) vorderen Augenabschnitts des linken Auges und jeweils eines Teils des Gesichts mit Brillenfassung in Trageposition jeweils durch das linke Brillenglas der Brillenfassung ermittelt wird, mittels eines Optimierungsverfahrens berechnet wird und/oder dass die lokale Brechkraft des rechten Brillenglases aus der Ableitung eines Gradientenfelds, das aus der Ablenkung des Abbildungsstrahlengangs für das Bild des wenigstens einen Strukturpunkts des i) vorderen Augenabschnitts des rechten Auges oder ii) vorderen Augenabschnitts des rechten Auges und jeweils eines Teils des Gesichts oder iii) vorderen Augenabschnitts des rechten Auges und jeweils eines Teils des Gesichts mit Brillenfassung in Trageposition jeweils durch das rechte Brillenglas der Brillenfassung ermittelt wird, mittels eines Optimierungsverfahrens berechnet wird.

Durch Ableitung des Gradientenfelds in definierten Richtungen kann eine Krümmung des Brillenglases ermittelt werden, welcher die fokussierende Wirkung der Linse entspricht. Außerdem können die Hauptachsen einer zylindrischen Wirkung bestimmt werden. Anhand eines Optimierungsverfahrens kann die Position, Form, Lage sowie ein Brechungsindex des Materials der Brillengläser ermittelt werden. Ein Vorteil dieser Berechnungsmethode über ein lokales Gradientenfeld ist, dass dadurch Rechenzeit eingespart wird.

Das Optimierungsverfahren kann insbesondere als ein inverser Ansatz formuliert sein.

Über einen sogenannten inversen Ansatz, wie er z. B. in der Publikation von K.N. Kutukalos und E. Steger, "A Theory of Refractive and specular 3D Shape by Light-Path Triangulation", International Journals of Computer Vision, 2008, Band 76, Ausgabe 1, Seiten 13 - 29, beschrieben ist, auf die hiermit vollumfänglich Bezug genommen und deren Offenbarungsgehalt in die Beschreibung dieser Erfindung mit einbezogen wird, ist es z. B. dann möglich, sowohl die Position als auch die Form und Lage sowie den Brechungsindex des Materials des linken und rechten Brillenglases in der Brillenfassung der Brille zu bestimmen und damit auch deren dioptrische oder fokussierende Wirkung für einen Brillenträger.

Ein mathematisches Problem wird als ein inverses Problem bezeichnet, wenn ausgehend von einem beobachteten Ergebnis eines Prozesses auf die diesem ursprünglich zu Grunde liegende Ursache geschlossen werden soll. Inverse Probleme sind oft schlecht gestellt, d. h. dass der Prozess nicht invertierbar ist und somit die Ursache nicht exakt berechnet werden kann. Ein typisches inverses Problem in der Bildverarbeitung ist z. B. die Berechnung des Ursprungsbilds aus einem verwackelten Bild ohne Kenntnis des Abbildungsoperators. Ein inverser Ansatz ist eine Umkehrung der sogenannten Vorwärtsrechnung. Anhand eines inversen Ansatzes kann in einer optischen Strahldurchrechnung, die auch als Raytracing bezeichnet wird, der Verlauf von Lichtstrahlen durch ein optisches System bestehend aus bekannten optischen Grenzflächen und bekannten Brechungsindizes zwischen den Grenzflächen berechnet werden.

Vorausgesetzt, dass die Grenzflächen, deren Normalen und die Brechungsindizes bekannt sind, ist es möglich, einen jeden Lichtstrahl durch das System eindeutig zu berechnen. Im Falle des inversen Ansatzes wird dabei eine optische Grenzfläche oder ein Brechungsindex gesucht, die bzw. der zu einer gegebenen Anzahl von Lichtstrahlen passt. Um eine Fehlergröße zu bestimmen, wird die Vorwärtsrechnung anhand der mittels des "inversen Ansatzes" bestimmten Fläche durchgeführt und es wird dann ein Vergleich von Strahlpunkten vor und/oder hinter der jeweiligen Grenzfläche erstellt. Durch Variation der zu bestimmenden Fläche wird dann gezielt mittels eines Optimierungsverfahrens die Fehlergröße minimiert. Alternativ zu reinen Optimierungsverfahren, die durch Parametervariationen das Minimum einer Fehlerfunktion ermitteln können, ist es möglich, hier sogenannte Lichtpfad-Triangulationsverfahren zum Einsatz zu bringen, die auch in Kombination mit einem Optimierungsverfahren genutzt werden. Derartige Verfahren sind z. B. bekannt aus der vorstehend erwähnten Publikation "K.N. Kutukalos und E. Steger, A Theory of Refractive and specular 3D Shape by Light-Path Triangulation, University of Toronto", Proc. 10th IEEE Int. Conf. on Computer Vision, Beijing, China, Seiten 1448-1455, 2005.

Ein Vorteil der Verwendung eines inversen Ansatzes ist, dass dadurch eine höhere Genauigkeit erzielt werden kann. Ein weiterer Vorteil der Verwendung eines inversen Ansatzes ist, dass das Vermessen von beispielsweise Gleitsicht-Brillengläsern möglich ist. Des Weiteren kann durch die Rekonstruktion der Oberflächentopographien der Vorderfläche und der Rückfläche des Brillenglases und des Brechungsindex von der lokalen Brechkraft und/oder Brechkraftverteilung auf die Refraktionswerte des Brillenträgers zurückgeschlossen werden.

Alternativ kann zur Bestimmung der lokalen Brechkraft und/oder Brechkraftverteilung auch eine Linse als Näherung der realen Linse aus zwei Flächen und einem Brechungsindex modelliert werden.

Eine vorteilhafte Weiterbildung des Verfahrens sieht deshalb vor, dass zur Bestimmung der lokalen Brechkraft und/oder Brechkraftverteilung des linken Brillenglases eine Linse modelliert wird, die zwei Flächen und einen Linsenmaterial-Brechungsindex aufweist, wobei Krümmungsradien wenigstens einer der Flächen sowie der Linsenmaterial-Brechungsindex der Linse in einem Optimierungsverfahren berechnet werden und/oder dass zur Bestimmung der lokalen Brechkraft und/oder Brechkraftverteilung des rechten Brillenglases eine Linse modelliert wird, die zwei Flächen und einen Linsenmaterial-Brechungsindex aufweist, wobei Krümmungsradien wenigstens einer der Flächen sowie der Brechungsindex der Linse in einem Optimierungsverfahren berechnet werden.

Vorzugsweise ist für eine Linse eine der Flächen torisch, die andere sphärisch. Diese Modellierung der Linsen hat den Vorteil einer erhöhten Genauigkeit, da die Parameter der Linsen direkt optimiert werden können.

Mittels eines iterativen Optimierungsverfahrens kann eine bestpassende Kombination der die Flächen beschreibenden Parameter und der Brechungsindizes der Linsen ermittelt werden und es kann daraus die lokale Brechkraft der Linsen in der lokalen Umgebung des Durchblickpunkts am Brillenglas bestimmt werden. Das Optimierungsverfahren kann hierbei ebenfalls als ein inverser Ansatz ausgebildet sein.

Um eine Brechkraftverteilung für ein gesamtes Brillenglas zu bestimmen, wird die obenstehende Berechnung für eine Vielzahl von ersten Bildern aus unterschiedlichen Aufnahmepositionen ausgeführt. Die Brechkraftverteilung eines linken und/oder eines rechten Brillenglases in einer Brillenfassung wird also bestimmt, indem eine lokale Brechkraft des linken und/oder rechten Brillenglases an einer Vielzahl von unterschiedlichen Stellen des linken und/oder rechten Brillenglases nach einem der oben beschriebenen Verfahren vermessen wird.

Für die Vermessung von Einstärkengläsern reicht die Ausführung der vorstehenden Verfahrensschritte für einen möglichst zentralen Durchblickpunkt der Brille aus. Daraus können Größen wie die sphärische und zylindrische Wirkung in Wert und Richtung sowie gegebenenfalls binokularische Prismenwerte ermittelt werden.

Zur Vermessung von Mehrstärken- oder Gleitsicht-Brillengläsern muss das Verfahren an anderen Durchblickzonen des Brillenglases wiederholt werden. Im einfachsten Fall würden eine Aufnahme der Ferne und eine der Nähe für den Lesebereich ausreichen. Es ist allerdings ebenfalls vorstellbar beliebig viele Durchblickpunkte zu vermessen. Einzig zwingende Randbedingung ist es, dass der Brillenträger immer den Blick in die Bilderfassungseinrichtung richtet, da nur so der exakte Ort der Pupille, berechnet werden kann. Es ist nicht nötig, dass der Brillenträger die Bilderfassungseinrichtung durch die von ihm getragene Brille scharf sieht. Folglich ist es ebenfalls möglich, die gesamte Brillenfassung durch Schwenken der Kamera im gesamten Sehfeld zu vermessen. So ist es möglich Aussagen über ein Gleitsichtdesign zu treffen. Zu ermittelnde Werte für ein Gleitsichtdesign sind z. B. "hartes" oder "weiches" Design, Progressionslänge oder -breite.

Ein erfindungsgemäßes Computerprogrammprodukt enthält ein Computerprogramm mit Programmcode zur Durchführung der vorstehend angegebenen Verfahrensschritte, wenn das Computerprogramm in eine Rechnereinheit geladen und/oder in einer Rechnereinheit durchgeführt wird.

Eine erfindungsgemäße Vorrichtung zum Vermessen der Brechkraftverteilung eines linken und/oder eines rechten Brillenglases in einer Brillenfassung enthält wenigstens eine Bilderfassungseinrichtung und eine Rechnereinheit, in die ein Computerprogramm mit Programmcode zur Durchführung der vorstehend angegebenen Verfahrensschritte geladen ist. Alternativ ist ein Programmcode vorstellbar, welcher Daten zu und von wenigstens einer weiteren Recheneinheit senden bzw. empfangen kann. Somit ist es möglich, die beschriebenen Berechnungen ganz oder teilweise auf weiteren Rechnereinheiten durchzuführen.

Eine solche Vorrichtung kann insbesondere als ein Smartphone oder als ein Tablet-Computer oder auch als eine digitale Kamera ausgebildet sein.

In einem weiteren Aspekt können das vorstehend beschriebene Verfahren und/oder die vorstehend beschriebene Vorrichtung und/oder das vorstehend beschriebene Computerprogramm zusammen mit wenigstens einem weiteren Verfahren und/oder wenigstens einer weiteren Vorrichtung und/oder einem weiteren Computerprogramm zur Anwendung kommen. Bei diesem wenigstens einen weiteren Verfahren kann es sich beispielsweise um ein Verfahren zur Bestimmung eines Refraktionsfehlers eines Auges eines Nutzers handeln, bevorzugt um ein Verfahren gemäß EP19170561.5, wobei dieses Verfahren die folgenden Schritte umfasst:

a) Darstellen eines Zeichens auf einem Bildschirm, wobei ein Parameter des auf dem Bildschirm dargestellten Zeichens verändert wird;
b) Erfassen einer Augenbewegungsmetrik des Auges des Nutzers in Abhängigkeit von dem auf dem Bildschirm dargestellten Zeichen; und
c) Feststellen eines Zeitpunkts, zu dem sich aus der Augenbewegungsmetrik des Auges des Nutzers eine Erkennungsschwelle des Nutzers für das auf dem Bildschirm dargestellte Zeichen ergibt; und

d) Bestimmen eines Wertes für den Refraktionsfehler des Auges des Nutzers aus dem zu dem Zeitpunkt festgelegten Parameter.

Alternativ oder zusätzlich zu dem vorstehend beschriebenen Verfahren kann es sich bei dem wenigstens einen weiteren Verfahren beispielsweise auch um ein Verfahren zur Bestimmung mindestens eines optischen Parameters eines Brillenglases handeln, bevorzug um ein Verfahren gemäß EP19170551.6, wobei dieses Verfahren folgende Schritte umfasst:

a) Aufnehmen eines Bildes unter Verwendung eines Brillenglases; und

b) Ermitteln mindestens eines optischen Parameters des Brillenglases mittels Bildverarbeitung des Bildes, wobei das Bild eine die Augen einschließende Augenpartie und/oder eine an die Augen angrenzende Gesichtspartie eines Nutzers des Brillenglases umfasst.

Alternativ oder zusätzlich zu den vorstehend beschriebenen Verfahren kann es sich bei dem wenigstens einen weiteren Verfahren beispielsweise auch um ein Verfahren zur Bestimmung eines Refraktionsfehlers eines Auges eines Nutzers handeln, bevorzugt um ein Verfahren gemäß EP19170558.1, wobei das Verfahren die folgenden Schritte umfasst:

a) Darstellen eines Zeichens auf einem Bildschirm, wobei ein Parameter des auf dem Bildschirm dargestellten Zeichens verändert wird;

b) Erfassen einer Reaktion des Nutzers in Abhängigkeit von dem auf dem Bildschirm dargestellten Zeichen;

c) Feststellen eines Zeitpunkts, zu dem sich aus der Reaktion des Nutzers eine Erkennbarkeit des auf dem Bildschirm dargestellten Zeichens für den Nutzer ergibt; und

d) Bestimmen eines Wertes für den Refraktionsfehler des Auges des Nutzers aus dem zu dem Zeitpunkt festgelegten Parameter, wobei das auf dem Bildschirm dargestellte Zeichen ein periodisches Muster ist, wobei der Parameter des auf dem Bildschirm dargestellten Musters mindestens eine Ortsfrequenz umfasst, und der Wert für den Refraktionsfehler aus der zu dem Zeitpunkt festgelegten Ortsfrequenz des Musters bestimmt wird.

Alternativ oder zusätzlich zu den vorstehend beschriebenen Verfahren kann es bei dem wenigstens einen weiteren Verfahren beispielsweise auch um ein Verfahren zum Vermessen der Brechkraftverteilung eines linken und/oder eines rechten Brillenglases in einer Brillenfassung handeln, bevorzugt um ein Verfahren gemäß EP19170715.7, in welchem in einem ersten Schritt mittels wenigstens einer Bilderfassungseinrichtung wenigstens eine erste Abbildung einer Szene aus wenigstens einer ersten Aufnahmeposition erfasst wird, wobei diese wenigstens eine erste Abbildung wenigstens zwei Strukturpunkte aufweist und ein linkes und/oder ein rechtes Brillenglas in einer Brillenfassung mit einem ein Koordinatensystem der Brillenfassung definierenden Abschnitt der Brillenfassung enthält, wobei der wenigstens eine Abbildungsstrahlengang für jeden dieser wenigstens zwei Strukturpunkte das erste und/oder das zweite Brillenglas der Brillenfassung jeweils mindestens einmal passiert und mindestens einmal nicht passiert. Jeder Abbildungsstrahlengang umfasst die Position des Strukturpunkts sowie den in die wenigstens eine Bilderfassungseinrichtung einfallenden Hauptstrahl. In einem weiteren Schritt, der zeitlich vor oder nach dem ersten Schritt liegen kann, wird wenigstens eine weitere Abbildung der Szene ohne das erste und/oder das zweite Brillenglas der Brillenfassung oder ohne die Brillenfassung enthaltend das erste und/oder das zweite Brillenglas mit denselben wenigstens zwei Strukturpunkten der ersten Abbildung einer Szene mittels wenigstens einer Bilderfassungseinrichtung aus der ersten Aufnahmeposition oder aus wenigstens einer von der ersten Aufnahmeposition verschiedenen weiteren Aufnahmeposition erfasst. Die wenigstens eine Bilderfassungseinrichtung kann in dem weiteren Schritt identisch oder verschieden zu der wenigstens einen Bilderfassungseinrichtung aus dem ersten Schritt sein. Bevorzugt ist die wenigstens eine Bilderfassungseinrichtung in dem weiteren Schritt identisch zu der wenigstens einen Bilderfassungseinrichtung aus dem ersten Schritt. Darauf werden in einem Schritt des Berechnens die Koordinaten dieser wenigstens zwei Strukturpunkte in einem zu dem Koordinatensystem der Brillenfassung referenzierten Koordinatensystem der Abbildung dieser Szene aus dem jeweiligen wenigstens einen Strahlengang dieser wenigstens zwei Strukturpunkte, welcher das linke und/oder rechte Brillenglas jeweils nicht passiert hat, und der wenigstens einen weiteren Abbildung der Szene mittels Bildauswertung bestimmt. Im Anschluss daran wird die Brechkraftverteilung in einem Schritt des Bestimmens einer Brechkraftverteilung für wenigstens einen Abschnitt des linken Brillenglases in dem Koordinatensystem der Brillenfassung und/oder in einem Schritt des Bestimmens einer Brechkraftverteilung für wenigstens einen Abschnitt des rechten Brillenglases in dem Koordinatensystem der Brillenfassung, jeweils aus den Abbildungsstrahlungsgängen, welche das jeweilige Brillenglas passiert haben, bestimmt.

Alternativ oder zusätzlich zu den vorstehend beschriebenen Verfahren kann es bei dem wenigstens einen weiteren Verfahren beispielsweise auch um ein Verfahren zum Vermessen der Brechkraftverteilung eines linken und/oder eines rechten Brillenglases in einer Brillenfassung handeln, bevorzugt um ein Verfahren gemäß EP19170715.7, in welchem in einem ersten Schritt mittels wenigstens einer Bilderfassungseinrichtung wenigstens eine erste Abbildung einer Szene aus wenigstens einer ersten Aufnahmeposition erfasst wird, wobei diese wenigstens eine erste Abbildung wenigstens zwei Strukturpunkte aufweist und ein linkes und/oder ein rechtes Brillenglas in einer Brillenfassung mit einem ein Koordinatensystem der Brillenfassung definierenden Abschnitt der Brillenfassung enthält, wobei der wenigstens eine Abbildungsstrahlengang für jeden dieser wenigstens zwei Strukturpunkte das erste und/oder das zweite Brillenglas der Brillenfassung jeweils mindestens einmal passiert und mindestens einmal nicht passiert. Jeder Abbildungsstrahlengang umfasst die Position des Strukturpunkts sowie den in die wenigstens eine Bilderfassungseinrichtung einfallenden Hauptstrahl. In einem weiteren Schritt, der zeitlich vor oder nach dem ersten Schritt liegen oder gleichzeitig mit dem ersten Schritt erfolgen kann, wird wenigstens eine weitere Abbildung der Szene mit dem linken und/oder dem rechten Brillenglas in einer Brillenfassung und mit einem ein Koordinatensystem der Brillenfassung definierenden Abschnitt der Brillenfassung mittels wenigstens einer Bilderfassungseinrichtung aus wenigstens einer von der ersten Aufnahmeposition verschiedenen weiteren Aufnahmeposition mit wenigstens einem Abbildungsstrahlengang für dieselben wenigstens zwei in der ersten Abbildung erfassten Strukturpunkte erfasst, wobei dieser wenigstens eine Abbildungsstrahlengang das erste und/oder das zweite Brillenglas der Brillenfassung jeweils mindestens einmal passiert und mindestens einmal nicht passiert. Darauf werden in einem weiteren Schritt die Koordinaten der wenigstens zwei Strukturpunkte in einem zu dem Koordinatensystem der Brillenfassung referenzierten Koordinatensystem der Szene aus dem jeweiligen wenigstens einen Strahlengang dieser wenigstens zwei Strukturpunkte, welcher das linke und/oder rechte Brillenglas jeweils nicht passiert hat und der wenigstens einen weiteren Abbildung der Szene mittels Bildauswertung berechnet. Anschließend wird die Brechkraftverteilung für wenigstens einen Abschnitt des linken Brillenglases in dem Koordinatensystem der Brillenfassung berechnet und/oder es wird die Brechkraftverteilung für wenigstens einen Abschnitt des rechten Brillenglases in dem Koordinatensystem der Brillenfassung, jeweils aus den Abbildungsstrahlengängen, welche das jeweilige Brillenglas passiert haben, bestimmt.

Bevorzugt wird in den beiden vorstehenden Verfahren zum Vermessen der Brechkraftverteilung eines linken und/oder eines rechten Brillenglases, vorzugsweise in einer Brillenfassung, eine Vielzahl von Strukturpunkten in der jeweils ersten Abbildung einer Szene aus jeweils wenigstens einer ersten Aufnahmeposition erfasst und die jeweils darauf folgenden Schritte anhand dieser jeweiligen Vielzahl von Strukturpunkten vorgenommen. Unter einer Vielzahl von Strukturpunkten werden bevorzugt wenigstens 10, weiter bevorzugt wenigstens 100, besonders bevorzugt wenigstens 1000 und ganz besonders bevorzugt wenigstens 10000 Strukturpunkte verstanden. Insbesondere ist eine Vielzahl von Strukturpunkten ≥ 100 Strukturpunkte und ≤ 1000 Strukturpunkte.

In einer übergeordneten Anwendung können die verschiedenen vorstehend beschriebenen Verfahren, d. h. das erfindungsgemäße Verfahren sowie das wenigstens eine weitere Verfahren, kombiniert werden, um beispielsweise aus einem Vergleich der jeweils erhaltenen Ergebnisse eine höhere Genauigkeit oder eine Plausibiltätsüberprüfung der in den einzelnen Verfahren erhaltenen Ergebnisse zu erhalten. Die verschiedenen vorstehend beschriebenen Verfahren können nacheinander oder gleichzeitig in der übergeordneten Anwendung erfolgen. Erfolgen die verschiedenen Verfahren nacheinander kann deren Reihenfolge unabhängig voneinander sein und/oder es kann sich um eine beliebige Reihenfolge handeln. Erfolgen die verschiedenen Verfahren nacheinander kann es bevorzugt sein, wenigstens eines der vorstehend beschriebenen Verfahren zur Bestimmung der Brechkraftverteilung zuletzt durchzuführen. Eine übergeordnete Anwendung kann beispielsweise ein die verschiedenen Verfahren umfassendes Computerprogramm sein.

Nachfolgend werden vorteilhafte Ausführungsbeispiele der Erfindung beschrieben, die in den Zeichnungen schematisch dargestellt sind.

Es zeigen:

Fig. 1 eine Vorrichtung mit einer Bilderfassungseinrichtung zum Vermessen der lokalen Brechkraft eines linken und rechten Brillenglases in einer Brillenfassung mit dem Kopf eines Brillenträgers, der die Brillenfassung trägt;

Fig. 2 eine mittels der Bilderfassungseinrichtung aus einer ersten Aufnahmeposition heraus erfasste erste Abbildung eines Abschnitts des Kopfs des Brillenträgers mit der Brillenfassung;

Fig. 3 eine mittels der Bilderfassungseinrichtung aus einer von der ersten Aufnahmeposition verschiedenen zweiten Aufnahmeposition heraus erfasste weitere erste Abbildung eines Abschnitts des Kopfs des Brillenträgers mit der Brillenfassung;

Fig. 4 eine mittels der Bilderfassungseinrichtung aus einer dritten Aufnahmeposition heraus erfasste weitere erste Abbildung eines Abschnitts des Kopfs des Brillenträgers mit der Brillenfassung;

Fig. 5 die Vorrichtung mit der Bilderfassungseinrichtung zum Vermessen der lokalen Brechkraft eines linken und rechten Brillenglases in einer Brillenfassung mit dem Kopf des Brillenträgers ohne die Brillenfassung, wobei die Blickrichtung des linken und rechten Auges auf die Bilderfassungseinrichtung gerichtet ist;

Fig. 6    eine mittels der Bilderfassungseinrichtung aus einer weiteren Aufnahmeposition heraus erfasste zweite Abbildung eines Abschnitts des Kopfs des Brillenträgers ohne die Brillenfassung;

Fig. 7    eine mittels der Bilderfassungseinrichtung aus einer weiteren Aufnahmeposition heraus erfasste weitere zweite Abbildung eines Abschnitts des Kopfs des Brillenträgers ohne die Brillenfassung;

Fig. 8    eine mittels der Bilderfassungseinrichtung aus einer weiteren Aufnahmeposition heraus erfasste weitere zweite Abbildung eines Abschnitts des Kopfs des Brillenträgers ohne die Brillenfassung;

Fig. 9    die Vorrichtung mit der Bilderfassungseinrichtung zum Vermessen der lokalen Brechkraft eines linken und rechten Brillenglases in einer Brillenfassung mit dem Kopf des Brillenträgers ohne die Brillenfassung und invarianten Blickrichtungen des linken und rechten Auges;

Fig. 10    eine mittels der Bilderfassungseinrichtung aus einer weiteren Aufnahmeposition heraus erfasste zweite Abbildung eines Abschnitts des Kopfs des Brillenträgers ohne die Brillenfassung mit invarianten Blickrichtungen des linken und rechten Auges;

Fig. 11    eine mittels der Bilderfassungseinrichtung aus einer weiteren Aufnahmeposition heraus erfasste weitere zweite Abbildung eines Abschnitts des Kopfs des Brillenträgers ohne die Brillenfassung mit invarianten Blickrichtungen des linken und rechten Auges;

Fig. 12    eine mittels der Bilderfassungseinrichtung aus einer weiteren Aufnahmeposition heraus erfasste weitere zweite Abbildung eines Abschnitts des Kopfs des Brillenträgers ohne die Brillenfassung mit invarianten Blickrichtungen des linken und rechten Auges;

Fig. 13    den Kopf des Brillenträgers mit einem linken Auge und dessen Augenrotationspunkt sowie einem linken Brillenglas und der Bilderfassungseinrichtung;

Fig. 14    den Kopf des Brillenträgers mit einem rechten Auge und dessen Augenrotationspunkt sowie einem rechten Brillenglas und der Bilderfassungseinrichtung; und

Fig. 15    die Vorrichtung mit einer Bilderfassungseinrichtung zum Vermessen der lokalen Brechkraft eines linken und rechten Brillenglases mit einem Abbildungsstrahlengang für einen Strukturpunkt, der das Brillenglas durchsetzt, und mit einem Abbildungsstrahlengang für einen Strukturpunkt, der das Brillenglas nicht durchsetzt.

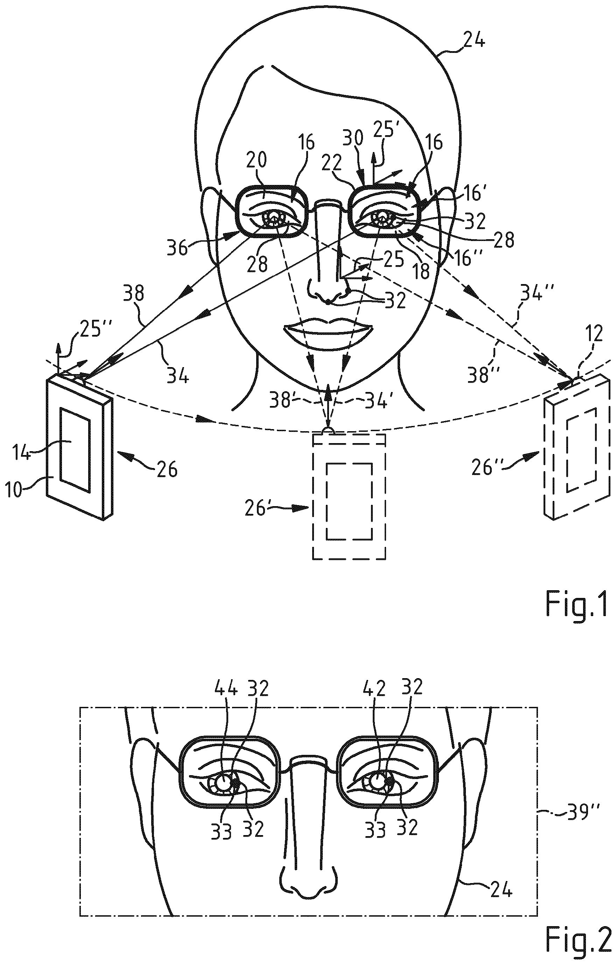

Die in der Fig. 1 gezeigte Vorrichtung 10 ist als ein Smartphone ausgebildet, das eine Bilderfassungseinrichtung 12 mit einem Objektivlinsensystem, das eine Eintrittsblende hat, und einen Bildsensor enthält. In dem Smartphone gibt es eine Rechnereinheit 14, die für das Ausführen von Bildverarbeitungsroutinen ausgelegt ist.

Zu bemerken ist, dass im Rahmen der Erfindung allerdings auch vorgesehen sein kann, dass die Vorrichtung 10 eine verlagerbare Bilderfassungseinrichtung enthält und Bilddaten zu einer stationär angeordneten Rechnereinheit für das Ausführen von Bildverarbeitungsroutinen über eine Kabel- oder Funkverbindung übertragen werden.

Mittels der Vorrichtung 10 kann an einer Vielzahl unterschiedlicher Stellen 16, 16', 16" die lokale Brechkraft eines linken Brillenglases 18 und eines rechten Brillenglases 20 in einer Brillenfassung 22 vermessen werden, die auf den Kopf 24 eines Brillenträgers aufgesetzt ist. Die Vorrichtung 10 ermöglicht damit das Vermessen der Brechkraftverteilung des linken und des rechten Brillenglases 18, 20. Zu bemerken ist, dass die Vorrichtung 10 alternativ zu einem Smartphone insbesondere auch als ein Tabletcomputer mit einer Bilderfassungseinrichtung oder als eine digitale Kamera mit einer Rechnereinheit ausgebildet sein kann.

Um die lokale Brechkraft des linken Brillenglases 18 in der Brillenfassung 22 zu vermessen, wird der Kopf 24 des Brillenträgers in einem ersten Schritt mittels der Bilderfassungseirichtung 12 der Vorrichtung 10 aus unterschiedlichen Aufnahmepositionen 26, 26', 26" heraus erfasst, um damit unterschiedliche erste Abbildungen 39, 39', 39" mit einem Bild des vorderen Augenabschnitts 28 des linken Auges 30 mit einer mehrere Strukturpunkte 32 aufweisenden ausgedehnten Struktur 33 darin zu erhalten, wobei das linke Auge 30 des Brillenträgers jeweils eine zu der Aufnahmeposition 26, 26', 26" der Bilderfassungseinrichtung weisende Blickrichtung 34, 34', 34" hat, die dabei möglichst eine Eintrittsblende in der Bilderfassungseinrichtung 12 durchsetzt. Entsprechend wird für das Vermessen der lokalen Brechkraft des rechten Brillenglases 20 in der Brillenfassung 22 der Kopf 24 des Brillenträgers mittels der Bilderfassungseinrichtung 12 der Vorrichtung 10 aus unterschiedlichen Aufnahmepositionen 26, 26', 26" heraus erfasst, um auch damit unterschiedliche erste Abbildungen 39, 39', 39" mit einem Bild des vorderen Augenabschnitts 28 des rechten Auges 36 mit einer mehrere Strukturpunkte 32 aufweisenden Struktur 33 darin zu erhalten, wobei das rechte Auge 36 des Brillenträgers jeweils eine zu der Aufnahmeposition 26, 26', 26" der Bilderfassungseinrichtung 12 weisende Blickrichtung 38, 38', 38" hat, die möglichst die Eintrittsblende in der Bilderfassungseinrichtung 12 durchsetzt.

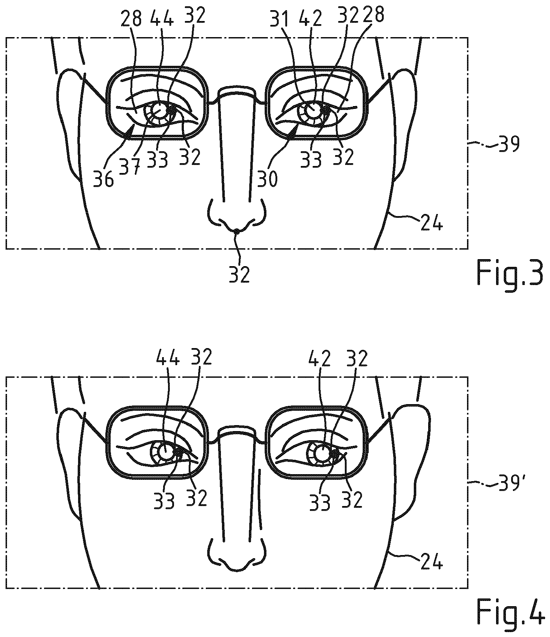

Die Fig. 2 zeigt die mittels der Bilderfassungseinrichtung 12 in der Vorrichtung 10 aus der Aufnahmeposition 26 erfasste erste Abbildung 39 eines Abschnitts des Kopfs 24 des Brillenträgers mit der Brillenfassung 22 und mit einem Bild eines vorderen Augenabschnitts 28 des linken Auges 30 mit den Strukturpunkten 32 der Struktur 33, der Iris, darin und mit einem Bild eines vorderen Augenabschnitts 28 des rechten Auges 36 mit einer Struktur 33, der Pupille, mit mehreren Strukturpunkt 32. In der Fig. 3 ist die mittels der Bilderfassungseinrichtung 12 in der Vorrichtung 10 aus der Aufnahmeposition 26' erfasste erste Abbildung 39' des Abschnitts des Kopfs 24 des Brillenträgers mit der Brillenfassung 22 und mit einem Bild des vorderen Augenabschnitts 28 des linken Auges 30 mit der Struktur 33 mit Strukturpunkten 32 darin und mit einem Bild eines vorderen Augenabschnitts 28 des rechten Auges 36 mit den Strukturpunkten 32 und der Struktur 33 zu sehen. Die Fig. 4 zeigt die mittels der Bilderfassungseinrichtung 12 in der Vorrichtung 10 aus der Aufnahmeposition 26" erfasste erste Abbildung 39" des Abschnitts des Kopfs 24 des Brillenträgers mit der Brillenfassung 22 und mit einem Bild des vorderen Augenabschnitts 28 des linken Auges 30 mit der Struktur 33 mit Strukturpunkten 32 darin und mit einem Bild eines vorderen Augenabschnitts 28 des rechten Auges 36 mit der Struktur 33 und den Strukturpunkten 32.

Wie in der Fig. 2, Fig.3 und Fig. 4 zu sehen ist, enthalten die dort gezeigten ersten Abbildungen 39, 39', 39" nicht nur jeweils ein Bild des vorderen Augenabschnitts 28 des linken Auges 30 mit wenigstens einem Strukturpunkt 32 darin und ein Bild des rechten Auges 36 mit einem Strukturpunkt 32 darin bei einer Blickrichtung, welche die Eintrittsblende der Bilderfassungseinrichtung 12 in den in der Fig. 1 gezeigten unterschiedlichen Aufnahmepositionen 26, 26' und 26" durchsetzt, sondern auch Bilder eines jeweils gleichen Abschnitts 23 der Brillenfassung 22 und ein Bild der Pupille 42 des linken Auges 30 und ein Bild der Pupille 44 des rechten Auges 36.

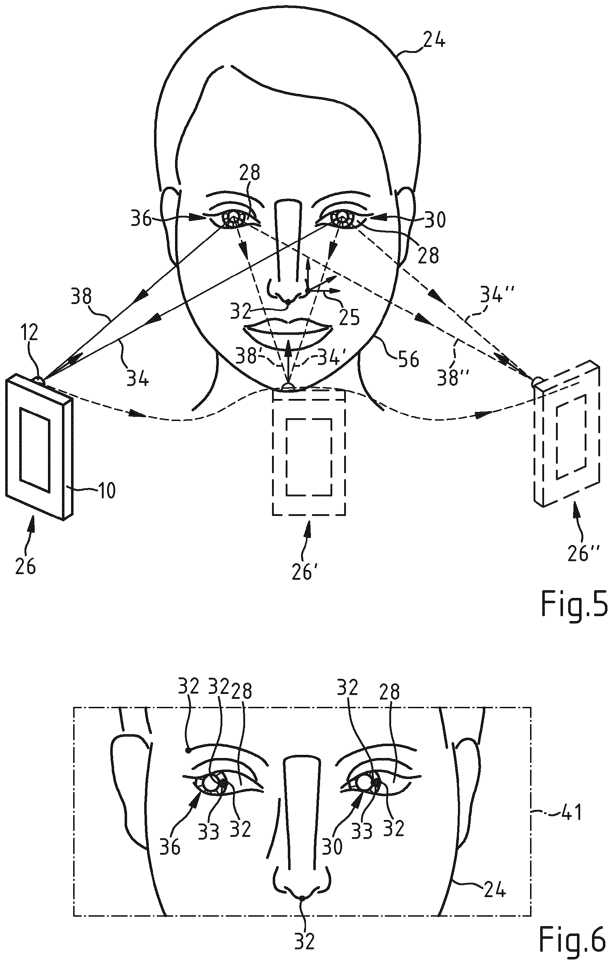

In einem zweiten Schritt, der zeitlich vor oder nach dem ersten Schritt liegen kann, wird der Kopf 24 des Brillenträgers, wie in der Fig. 5 zu sehen, ohne die Brillenfassung 22 mittels der Bilderfassungseinrichtung 12 der Vorrichtung 10 aus weiteren unterschiedlichen Aufnahmepositionen 26, 26', 26" heraus erfasst, die von den Aufnahmepositionen für das Aufnehmen des Kopfs des Brillenträgers mit der Brillenfassung verschieden sein können, um damit unterschiedliche zweite Abbildungen 41, 41', 41" mit einem Bild des vorderen Augenabschnitts 28 des linken Auges 30 mit der Struktur 33 und den Strukturpunkten 32 darin zu erhalten. Die Blickrichtung 34 des linken Auges 30 des Brillenträgers ist dabei wiederum auf eine Eintrittsblende der Bilderfassungseinrichtung 12 der Vorrichtung 10 gerichtet.

Entsprechend wird für das Vermessen der lokalen Brechkraft des rechten Brillenglases 20 in der Brillenfassung 22 der Kopf 24 des Brillenträgers mittels der Bilderfassungseinrichtung 12 der Vorrichtung 10 aus unterschiedlichen Aufnahmepositionen 26, 26', 26" heraus erfasst, um auch damit unterschiedliche zweite Abbildungen 41, 41', 41" mit einem Bild des vorderen Augenabschnitts 28 des rechten Auges 36 mit der Struktur 33 und den Strukturpunkten 32 darin zu erhalten. Die Blickrichtung 38 des rechten Auges 36 des Brillenträgers ist dabei wiederum auf eine Eintrittsblende der Bilderfassungseinrichtung 12 der Vorrichtung 10 gerichtet.

Die Fig. 6 zeigt die mittels der Bilderfassungseinrichtung 12 in der Vorrichtung 10 aus der Aufnahmeposition 26 erfasste zweite Abbildung 41 eines Abschnitts des Kopfs 24 des Brillenträgers ohne Brillenfassung 22 und mit einem Bild eines vorderen Augenabschnitts 28 des linken Auges 30 mit der Struktur 33 und den Strukturpunkten 32 und mit einem Bild eines vorderen Augenabschnitts 28 des rechten Auges 36 mit der Struktur 33 und den Strukturpunkten 32.

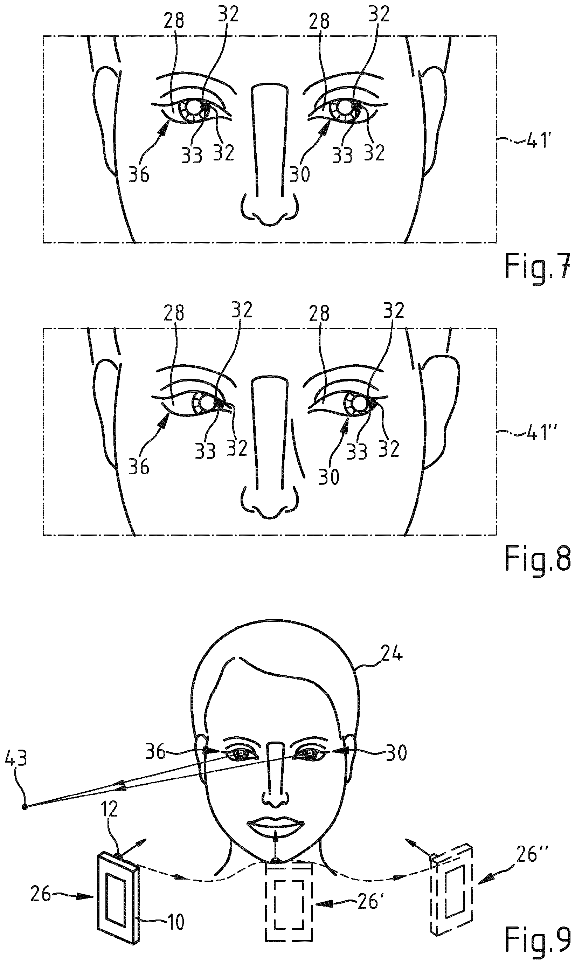

In der Fig. 7 ist die mittels der Bilderfassungseinrichtung 12 in der Vorrichtung 10 aus der Aufnahmeposition 26' erfasste zweite Abbildung 41' des Abschnitts des Kopfs 24 des Brillenträgers ohne Brillenfassung 22 und mit einem Bild des vorderen Augenabschnitts 28 des linken Auges 30 mit der Struktur 33 und den Strukturpunkten 32 darin und mit einem Bild eines vorderen Augenabschnitts 28 des rechten Auges 36 mit der Struktur 33 und den Strukturpunkten 32 dargestellt.

Die Fig. 8 zeigt die mittels der Bilderfassungseinrichtung 12 in der Vorrichtung 10 aus der Aufnahmeposition 26" erfasste zweite Abbildung 41" des Abschnitts des Kopfs 24 des Brillenträgers ohne Brillenfassung 22 und mit einem Bild des vorderen Augenabschnitts 28 des linken Auges 30 mit der Struktur 33 und den Strukturpunkten 32 und mit einem Bild eines vorderen Augenabschnitts 28 des rechten Auges 36 mit der Struktur 33 und den Strukturpunkten 32.

Alternativ dazu, dass mittels der Bilderfassungseinrichtung 12 unterschiedliche zweite Abbildungen 41, 41', 41" des Kopfs 24 des Brillenträgers ohne die Brillenfassung 22 mit einem Bild des vorderen Augenabschnitts 28 des linken Auges 30 und/oder des rechten Auges 36 mit wenigstens einem Strukturpunkt 32 erfasst werden, während der Brillenträger seinen Blick auf eine Eintrittsblende der Bilderfassungseinrichtung 12 richtet, ist es wie in der Fig. 9 gezeigt auch möglich, zweite Abbildungen 41, 41', 41" des Kopfs 24 des Brillenträgers ohne die Brillenfassung 22 mit einem Bild des vorderen Augenabschnitts 28 des linken Auges 30 und/oder des rechten Auges 36 mit wenigstens einem Strukturpunkt 32 zu erfassen, während der Brillenträger, wie in der Fig. 9 gezeigt, auf einen ortsfesten Punkt 43 im Raum oder alternativ auf einen Punkt im Unendlichen blickt.

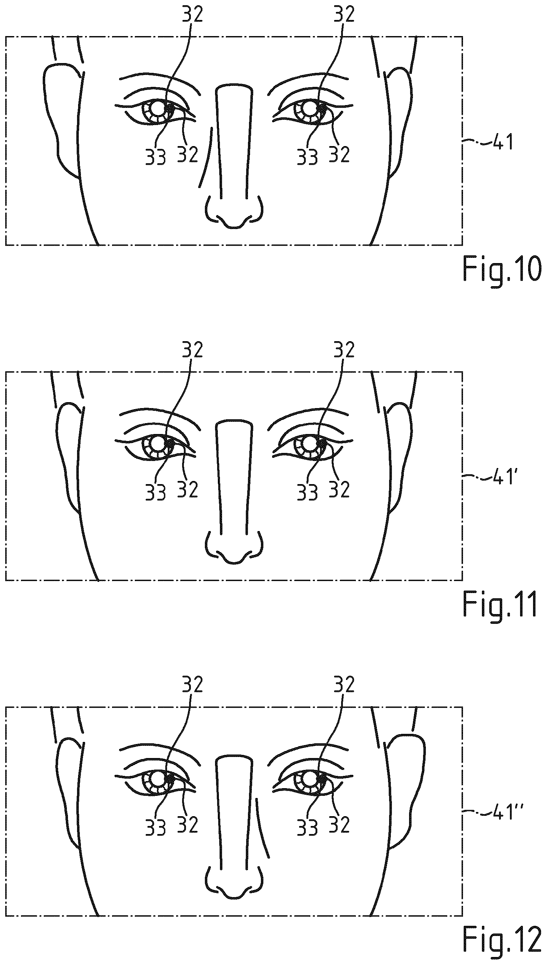

Die Fig. 10 zeigt eine mittels der Bilderfassungseinrichtung 12 in der Vorrichtung 10 aus der in der Fig. 9 kenntlich gemachten Aufnahmeposition 26 erfasste zweite Abbildung 41 eines Abschnitts des Kopfs 24 des Brillenträgers ohne Brillenfassung 22. In der Fig. 11 ist eine mittels der Bilderfassungseinrichtung 12 in der Vorrichtung 10 aus der in der Fig. 9 kenntlich gemachten Aufnahmeposition 26' erfasste zweite Abbildung 41' eines Abschnitts des Kopfs 24 des Brillenträgers ohne Brillenfassung 22 zu sehen. Die Fig. 12 zeigt eine mittels der Bilderfassungseinrichtung 12 in der Vorrichtung 10 aus der in der Fig. 9 kenntlich gemachten Aufnahmeposition 26" erfasste zweite Abbildung 41" eines Abschnitts des Kopfs 24 des Brillenträgers ohne Brillenfassung 22.

Die in der Fig. 6, Fig. 7 und Fig. 8 sowie in der Fig. 10, Fig. 11 und Fig. 12 gezeigten zweiten Abbildungen 41, 41', 41" enthalten nicht nur jeweils ein Bild des vorderen Augenabschnitts 28 des linken Auges 30 mit der Struktur 33 und den Strukturpunkten 32 und ein Bild vorderen Augenabschnitts 28 des rechten Auges 36 mit der Struktur 33 und den Strukturpunkten 32 zu den in der Fig. 5 bzw. der Fig. 9 gezeigten unterschiedlichen Aufnahmepositionen 26, 26', 26" der Bilderfassungseinrichtung 12, sondern neben einem Bild der Pupille 42 des linken Auges 30 und einem Bild der Pupille 44 des rechten Auges 36 auch einen Strukturpunkt 32 des Kopfs 24 des Brillenträgers in Form eines Punkts auf der Nasenspitze, dessen Lage in einem zu dem Kopf 24 des Brillenträgers ortsfesten Koordinatensystem 25 - anders als die im Allgemeinen von der jeweiligen Blickrichtung abhängige Lage der Strukturpunkte 32 in dem vorderen Augenabschnitt 28 des linken und rechten Auges 30, 36 - grundsätzlich von der Blickrichtung 34, 34', 34" des linken Auges 30 und von der Blickrichtung 38, 38', 38" des rechten Auges 36 unabhängig ist. Ein Punkt, dessen Lage in einem zu dem Kopf 24 des Brillenträgers ortsfesten Koordinatensystem 25 von der Blickrichtung 34, 34', 34", 38, 38', 38" des linken und rechten Auges 30, 36 im Allgemeinen unabhängig ist, kann allerdings z. B. auch ein Punkt eines Naseflügels der Nase oder ein Punkt einer Augenbraue sein.

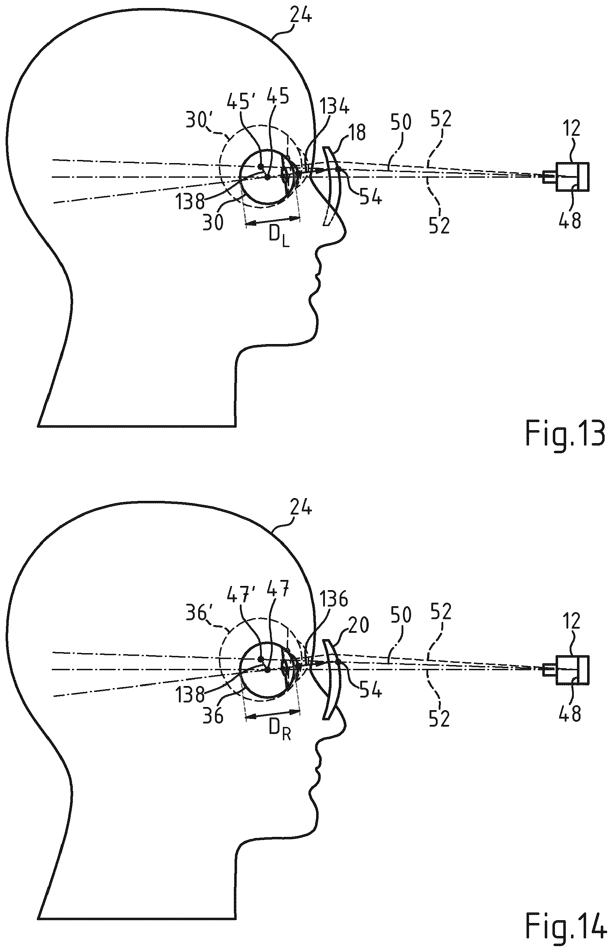

Die Fig. 13 zeigt den Kopf 24 des Brillenträgers mit dem linken Auge 30 und dessen Augenrotationspunkt 45 sowie dem linken Brillenglas 18 und der Bilderfassungseinrichtung 12. In der Fig. 14 ist der Kopf 24 des Brillenträgers mit dem rechten Auge 36 und dessen Augenrotationspunkt 47 sowie dem rechten Brillenglas 20 und der Bilderfassungseinrichtung 12 zu sehen. Mittels der Bilderfassungseinrichtung 12 wird durch das linke und rechte Brillenglas 18, 20 das linke und rechte Auge 30, 36 als das Bild eines scheinbaren linken bzw. rechten Auges 30', 36' erfasst, das abhängig von den dioptrischen Eigenschaften des linken bzw. rechten Brillenglases 18, 20 größer oder kleiner als das linke bzw. rechte Auge 30, 36 ist und das von diesem abliegt.

In der Rechnereinheit 14 der Vorrichtung 10 werden aus ersten Abbildungen 39, 39', 39", wie sie in der Fig. 2 bis Fig. 4 gezeigt sind und die identische Abschnitte der Brillenfassung 22 enthalten, mittels Bildauswertung Brillenfassungsinformationsdaten berechnet, die Informationen aus der Gruppe Position, Lage, Form und Koordinaten der Brillenfassung 22 in einem zu der Brillenfassung ortsfesten Koordinatensystem 25' umfassen.

Aus den zweiten Abbildungen 41, 41', 41", wie sie in der Fig. 6, Fig. 7 und Fig. 8 sowie Fig. 10, Fig. 11 und Fig. 12 zu sehen sind, werden in der Rechnereinheit 14 der Vorrichtung 10 mittels Bildauswertung die Koordinaten der Strukturpunkte 32 des vorderen Augenabschnitts 28 des linken Auges 30 und die Koordinaten der Strukturpunkte 32 des vorderen Augenabschnitts 28 des rechten Auges 36 berechnet. Anhand der Abstände der Strukturpunkte 32 kann dann die Größe von Strukturen, z. B. der Iris, im vorderen Augenabschnitt 28 des linken bzw. rechten Auges 30, 36 bestimmt werden. Aus den Verhältnissen der Größen der durch das Brillenglas in den ersten Abbildungen beobachteten Strukturen zu den realen Größen der Strukturen berechnet aus den zweiten Abbildungen kann auf die lokale Brechkraft geschlossen werden.

Darüber hinaus werden in der Rechnereinheit 14 die Koordinaten des Augenrotationspunkts 45 des linken Auges 30 und des Augenrotationspunkts 47 des rechten Auges 36 aus einem für das linke Auge 30 angenommenen Augendurchmesser $D_L$ und aus einem für das rechte Auge 36 angenommenen Augendurchmesser $D_R$ sowie aus den Koordinaten zu Strukturpunkten 32 des Kopfes 24 berechnet, wobei deren Koordinaten aus wenigstens zwei Abbildungen aus einer Gruppe wenigstens zweier erster Abbildungen 39, 39', 39", 39''', wie sie in der Fig. 2 bis Fig. 4 gezeigt sind, und wenigstens zweier zweiter Abbildungen 41, 41', 41", wie sie in den Fig. 6 bis Fig. 8 und Fig. 10 bis Fig. 12 gezeigt sind, bestimmt werden.

Der Augenrotationspunkt 45 des linken Auges 30 und der Augenrotationspunkt 47 des rechten Auges 36 wird hierfür aus bekannten Informationen zur Lage des linken und rechten Auges 30, 36 in dem Kopf 24 des Brillenträgers anhand von Koordinaten zu Strukturpunkten 32 des Kopfes 24, z. B. der Nasenspitze, sowie einem angenommenen, z. B. standardisierten Wert für den Augendurchmesser $D_L$ des linken Auges 30 und einem angenommenen Wert für den Augendurchmesser $D_R$ des rechten Auges 36 bestimmt. Der Augendurchmesser $D_L$, $D_R$ des linken und rechten Auges 30, 36 einer Person ist grundsätzlich abhängig von deren Geschlecht und deren Alter. Es zeigt sich, dass die Annahme eines Augendurchmessers $D_{L,R}$ mit $22\,mm \leq D_{L,R} \leq 23\,mm$ eine gute Abschätzung für die tatsächliche Größe eines Augendurchmessers ist.

Die Koordinaten von Strukturpunkten 32 des vorderen Augenabschnitts 28 des linken Auges 30 und des rechten Auges 36 werden in der Rechnereinheit 14 der Vorrichtung 10 aus den erfassten zweiten Abbildungen 41, 41', 41" des Kopfes 24 des Brillenträgers ohne die Brillenfassung 22, wie sie in den Fig. 6 bis Fig. 8 und Fig. 10 bis Fig. 12 gezeigt sind, berechnet, indem das Bild ein und desselben Strukturpunkts 32 in unterschiedlichen Abbildungen 41, 41 ', 41" mittels eines Feature-Matching-Verfahrens detektiert und dann anhand bekannter intrinsischer und extrinsischer Parameter der Bilderfassungseinrichtung 12 trianguliert wird. Diese intrinsischen und extrinsischen Parameter der Bilderfassungseinrichtung 12 sind in einem Datenspeicher der Rechnereinheit 14 abgelegt. Sie können z. B. mittels eines Kamerakalibrierungsverfahrens oder auch mittels eines SLAM-Verfahrens bestimmt werden. Zu bemerken ist, dass für diese Triangulation insbesondere sogenannte Tiefenschätzungs-Verfahren und 3D-Rekonstruktionsverfahren zum Einsatz kommen können.

In der Rechnereinheit 14 werden dann zu einer in der Fig. 2 bis Fig. 4 gezeigten ersten Abbildung 39, 39', 39" der Durchblickpunkt 54 durch das linke Brillenglas 18 bestimmt.

Hierfür wird zu der entsprechenden ersten Abbildung 39, 39', 39" mittels Bildauswertung zunächst das Pupillenzentrum 31 der Pupille 42 des linken Auges 30 in dieser Abbildung bestimmt. Dies kann z. B. in einem Algorithmus anhand einer Segmentierung des vorderen Augenabschnitts 28 des linken Auges 30 erfolgen, bei dem dunkle Ellipsen innerhalb dieses vorderen Augenabschnitts 28 detektiert werden, deren geometrischer Schwerpunkt als das gesuchte Pupillenzentrum 31 angenommen wird. Zu bemerken ist, dass dieses Bestimmen des Pupillenzentrums nicht zwingend in einer Rechnereinheit erfolgen muss sondern grundsätzlich auch manuell durch eine Person erfolgen kann, die das Verfahren zum Vermessen der lokalen Brechkraft oder der Brechkraftverteilung eines linken und/oder eines rechten Brillenglases anwendet.

Anhand der Kenntnis der intrinsischen und extrinsischen Parameter der Bilderfassungseinrichtung 12 beim Erfassen einer Abbildung 39, 39', 39" kann so zu dem in der Fig. 3 gezeigten angenommenen Pupillenzentrum 31 der Pupille 42 des linken Auges 30 in der Bildebene 48 der Bilderfassungseinrichtung 12 der zugehörige Hauptstrahl 50 des Abbildungsstrahlengangs 52 bestimmt werden, mit dem das Pupillenzentrum 31 der Pupille 42 des linken Auges 30 durch das linke Brillenglas 18 in die Bildebene 48 der Bilderfassungseinrichtung 12 abgebildet wird. Dieser Hauptstrahl 50 wird durch das linke Brillenglas 18 gebrochen. Der Durchblickpunkt 54, an dem der Hauptstrahl 50 das linke Brillenglas 18 auf der dem Brillenträger abgewandten Seite durchsetzt, kann dann unter Berücksichtigung der wie vorstehend beschrieben ermittelten Brillenfassungsinformationsdaten, d. h. unter Berücksichtigung der Koordinaten der Brillenfassung 22 auf dem Kopf 24 des Brillenträgers, als der Schnittpunkt des Hauptstrahls 50 mit dem linken Brillenglas 18, d. h. als der Durchblickpunkt (x,y) des linken Auges 30 durch das linke Brillenglas 18, berechnet werden. Daraus kann eine angenommene Blickrichtung 134 des linken Auges 30 des Brillenträgers bestimmt werden, die einem von dem Augenrotationspunkt 45 des linken Auges 30 in Richtung des Durchblickpunkts 54 am linken Brillenglas 18 zeigenden Vektors entspricht. Der Schnittpunkt dieses Vektors mit einer Kugel um das Augenrotationszentrum 45 des linken Auges 30, deren Durchmesser dem Augendurchmesser $D_L$ entspricht, ergibt dann das Pupillenzentrum 31 der Pupille 42 des linken Auges 30.

Für das Bestimmen des in der Fig. 14 gezeigten Durchblickpunkts 54 durch das rechte Brillenglas 20 wird zu der entsprechenden ersten Abbildung 39, 39', 39" mittels Bildauswertung zunächst das Pupillenzentrum 37 der Pupille 44 des rechten Auges 36 in dieser Abbildung bestimmt. Dies kann wiederum mittels des vorstehend angegebenen Algorithmus oder von Hand erfolgen. Anhand der Kenntnis der intrinsischen und extrinsischen Parameter der Bilderfassungseinrichtung 12 beim Erfassen einer Abbildung 39, 39', 39" kann dann auch hier zu dem in der Fig. 3 gezeigten angenommenen Pupillenzentrum 37 der Pupille 44 des rechten Auges 36 in der Bildebene 48 der Bilderfassungseinrichtung 12 der zugehörige Hauptstrahl 50 des Abbildungsstrahlengangs 52 bestimmt werden, mit dem das Pupillenzentrum 37 der Pupille 44 des rechten Auges 36 durch das rechte Brillenglas 20 in die Bildebene 48 der Bilderfassungseirichtung 12 abgebildet wird. Dieser Hauptstrahl 50 wird durch das rechte Brillenglas 20 gebrochen. Der Ort der Brechung dieses Hauptstrahls 50 an dem rechten Brillenglas 20 kann dann wiederum unter Berücksichtigung der wie vorstehend beschrieben ermittelten Brillenfassungsinformationsdaten, d. h. unter Berücksichtigung der Koordinaten der Brillenfassung 22 auf dem Kopf 24 des Brillenträgers, als der Schnittpunkt des Hauptstrahls 50 mit dem rechten Brillenglas 20, d. h. als der Durchblickpunkt (x,y) durch das rechte Brillenglas 20, berechnet werden.

Daraus kann eine angenommene Blickrichtung 136 des rechten Auges 36 des Brillenträgers bestimmt werden, die einem von dem Augenrotationspunkt 47 des rechten Auges 36 ausgehenden und in Richtung des Durchblickpunkts 54 am rechten Brillenglas 20 zeigenden Vektors entspricht. Der Schnittpunkt dieses Vektors mit einer Kugel um das Augenrotationszentrum 47 des rechten Auges 36, deren Durchmesser dem Augendurchmesser $D_R$ entspricht, ergibt dann das in der Fig.3 gezeigte Pupillenzentrum 37 der Pupille 44 des rechten Auges 36.

Aus den Strukturpunkten 32 der Strukturen des vorderen Augenabschnitts 28 des linken Auges 30 werden Größen der Strukturen darin anhand der aus den zweiten Abbildungen 41, 41', 41" zuvor berechneten Koordinaten dieser Strukturpunkte 32 und deren Abstände voneinander bestimmt, z. B. der Durchmesser der Iris. Außerdem wird die Größe der scheinbaren durch das linke Brillenglas 18, 20 beobachteten Strukturen 33 anhand einer ersten Abbildung 39, 39', 39" wie folgt bestimmt: zu jedem Strukturpunkt 32 in diesen Abbildungen wird mittels der intrinsischen und extrinsischen Parameter der Bilderfassungseinrichtung 12 der zugehörige Hauptstrahl 50 berechnet sowie dessen Schnittpunkt mit dem linken Brillenglas 18 bestimmt. Aus diesen Schnittpunkten und deren Abständen zueinander können dann die scheinbaren Größen der Struktur 33 bei Beobachtung durch das linke Brillenglas 18 bestimmt werden. Aus dem Verhältnis der realen zu den scheinbaren Größen kann dann die lokale Brechkraft am Durchblickpunkt 54 des linken Brillenglases 18 angegeben werden.

Aus den Strukturpunkten 32 der Strukturen des vorderen Augenabschnitts 28 des rechten Auges 36 werden Größen der Strukturen 33 darin anhand der aus den zweiten Abbildungen 41, 41', 41" zuvor berechneten Koordinaten dieser Strukturpunkte 32 und deren Abstände voneinander bestimmt, z. B. der Durchmesser der Iris. Außerdem wird die Größe der scheinbaren durch das rechte Brillenglas 20 beobachteten Strukturen 33 anhand einer ersten Abbildung 39, 39', 39" wie folgt bestimmt: zu jedem Strukturpunkt 32 in diesen Abbildungen wird mittels der intrinsischen und extrinsischen Parameter der Bilderfassungseinrichtung 12 der zugehörige Hauptstrahl 50 berechnet sowie dessen Schnittpunkt mit dem rechten Brillenglas 20 bestimmt. Aus diesen Schnittpunkten und deren Abständen zueinander können dann die scheinbaren Größen der Struktur 33 bei Beobachtung durch das rechte Brillenglas 20 bestimmt werden. Aus dem Verhältnis von Größen der Strukturen 33, wenn diese mittels der Bilderfassungseinrichtung 12 ohne ein zwischen der Bilderfassungseinrichtung 12 und dem linken bzw. rechten Auge 30, 36 angeordnetes Brillenglas 18, 20 erfasst werden, zu den Größen der Strukturen, die diese in den mittels der Bilderfassungseinrichtung 12 durch das linke bzw. rechte Brillenglas erfassten Abbildungen haben, ergibt sich durch Auswerten der Abbildungsgleichungen die Brechkraft des linken bzw. rechten Brillenglases 18, 20 an den von der angenommenen Blickrichtung 134, 136 durchsetzten Stellen.

Aus der berechneten Lage (x, y) der Durchblickpunkte 54 durch das linke und rechte Brillenglas 18, 20 für die angenommene Blickrichtung 134 des linken Auges 30 und für die angenommene Blickrichtung 136 des rechten Auges 36 und den wie vorstehend beschrieben berechneten Koordinaten des Augenrotationspunkts 45, 47 für das rechte bzw. linke Auge 30, 36 wird dann in der Rechnereinheit 14 der Vorrichtung 10 anhand eines anhand der Abbildungsgleichungen für den Augenrotationspunkt 45', 47' mittels der Bilderfassungseinrichtung durch das linke bzw. rechte Brillenglas 18, 20 ermittelten dreidimensionalen Versatzes 138 der Augenrotationspunkte 45, 47' des scheinbaren linken bzw. rechten Auges 30, 36' zu dem Augenrotationspunkt 45, 47 des linken bzw. rechten Auges 30, 36 die prismatische Wirkung des linken bzw. rechten Brillenglases 18, 20 bestimmt.

Zu bemerken ist, dass in dem Schritt des Bestimmens einer lokalen dioptrischen Wirkung des linken Brillenglases an dem Durchblickpunkt die lokale prismatische Wirkung grundsätzlich auch anhand eines Versatzes des vorderen Augenabschnittes in dem Bild des linken Auges ermittelt werden kann.

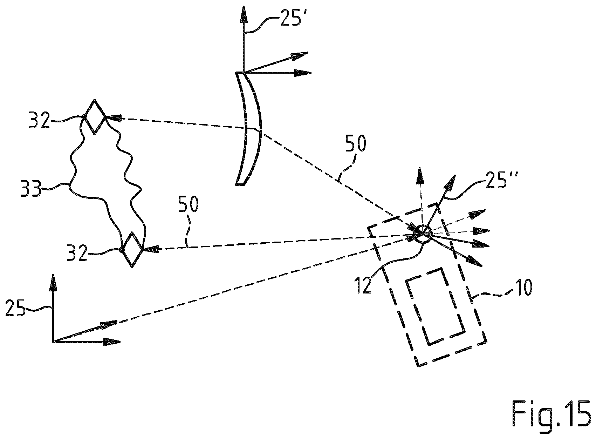

Die Fig. 15 erläutert das Berechnen von Abbildungsstrahlengängen für Strukturpunkte 32 einer Struktur 33, deren Bilder in mittels der Bilderfassungseinrichtung 12 erfassten Abbildungen liegen.

Aus einer Pixelkoordinate in homogenen Koordinaten

$$C = \begin{pmatrix} C_x \\ C_y \\ 1 \end{pmatrix}$$

eines in der Bilderfassungseinrichtung 12 abgebildeten Strukturpunkts 32 eines Augenabschnitts 28 des linken Auges 30 bzw. des rechten Auges 36 wird anhand des bekannten Kamerakalibrierungsoperators $\overline{K}$ wie oben beschrieben der Hauptstrahl 50 des in die Bildebene der Bilderfassungseinrichtung 12 abbildenden Abbildungsstrahlengangs 52 für den einen Strukturpunkt 32 in Form eines dreidimensionalen Vektors in einem Koordinatensystem 25" der Bilderfassungseinrichtung

$$\vec{r}_0 = \overline{K}^{-1} \cdot C$$

bestimmt. Aus den extrinsischen Parametern der Bilderfassungseinrichtung 12 zu einer in Bezug auf die Brillenfassung 22 und den Kopf 24 des Brillenträgers bekannten Aufnahmeposition 26, d. h. der räumlichen Lage und Orientierung der Bilderfassungseinrichtung 12 mit dem Koordinatensystem 25" in einem zu dem Koordinatensystem 25' der Brillenfassung 22 und in einem Koordinatensystem 25, das zu dem Kopf 24 des Brillenträgers ortsfest ist, wird $\vec{r}_0$ dann durch die Lineartransformation

$$\vec{r}_{Szene} = \overline{R}^T \cdot (\vec{r}_0 - \overline{T})$$

aus dem Koordinatensystem 25" der Bilderfassungseinrichtung 12 durch eine dem inversen Rotationsoperator $\overline{R}^T$ entsprechende Drehung und eine dem inversen Translationsoperator $-\vec{T}$ entsprechende Translation in das Koordinatensystem 25' der Brillenfassung 22 bzw. das zu dem Kopf 24 des Brillenträgers ortsfeste Koordinatensystem 25 überführt.

Aus einem jeden abgebildeten Strukturpunkt 32 wird dann ein Hauptstrahl 50 des Abbildungsstrahlengangs 52, der ein Brillenglas 18, 20 der Brille mit bekannter Position und Lage in dem Koordinatensystem 25" der Bilderfassungseinrichtung 12 durchsetzt, entsprechend der Aufnahmeposition 26 der Bilderfassungseinrichtung 12 berechnet. Hieraus und aus den zuvor bestimmten Koordinaten der unterschiedlichen Strukturpunkte 32 des Augenabschnitts 28 des linken Auges 30 bzw. des rechten Auges 36 ergibt sich dann ein Strahlenmodell, das für einen jeden Strukturpunkt 32 den zugehörigen an dem Durchblickpunkt 54 von dem linken bzw. rechten Brillenglas 18, 20 abgelenkten Abbildungsstrahlengang 52 enthält Daraus kann die prismatische Wirkung des entsprechenden linken oder rechten Brillenglases 18, 20 berechnet werden.

Indem die lokale Brechkraft k(x,y) des linken und rechten Brillenglases 18, 20 für viele unterschiedliche Blickrichtungen des Brillenträgers, d. h. eine Vielzahl unterschiedlicher Durchblickpunkte 54 durch das linke und rechte Brillenglas 18, 20 bestimmt wird, kann die Rechnereinheit 14 dann eine Verteilung der Brechkraft k(x,y) über das Brillenglas 18, 20 ermitteln.

Zu bemerken ist, dass die Genauigkeit der Berechnung der lokalen Brechkraft k(x,y) des linken und rechten Brillenglases 18, 20 insbesondere dadurch gesteigert werden kann, dass eine Vielzahl unterschiedliche Strukturpunkte 32 in dem vorderen Augenabschnitt 28 des linken und rechten Auges 30, 36 eines Brillenträgers in einer Vielzahl von ersten und zweiten Abbildungen des Kopfs 24 des Brillenträgers erfasst und ausgewertet werden.

**Bezugszeichenliste**

| | |
|---|---|
| 10 | Vorrichtung |
| 12 | Bilderfassungseinrichtung |
| 14 | Rechnereinheit |
| 15 | Koordinatensystem der Bilderfassungseinrichtung |
| 16, 16', 16" | Stelle |
| 18 | linkes Brillenglas |
| 20 | rechtes Brillenglas |
| 22 | Brillenfassung |
| 23 | Abschnitt der Brillenfassung |
| 24 | Kopf |
| 25, 25', 25" | Koordinatensystem |
| 26, 26', 26" | Aufnahmeposition |
| 28 | vorderer Augenabschnitt |
| 30 | linkes Auge |
| 30' | scheinbares linkes Auge |
| 31 | linkes Pupillenzentrum |
| 32 | Strukturpunkt |
| 33 | Struktur |
| 34, 34', 34" | Blickrichtung linkes Auge |
| 36 | rechtes Auge |
| 36' | scheinbares rechtes Auge |
| 37 | rechtes Pupillenzentrum |
| 38, 38', 38" | Blickrichtung rechtes Auge |
| 39, 39', 39'" | erste Abbildung |
| 40 | Augenrotationspunkt |
| 41, 41', 41" | zweite Abbildung |
| 42 | Pupille linkes Auge |
| 43 | Punkt im Raum |
| 44 | Pupille rechtes Auge |
| 45 | Augenrotationspunkt linkes Auge |
| 45' | Augenrotationspunkt scheinbares linkes Auge |
| 47 | Augenrotationspunkt rechtes Auge |
| 47' | Augenrotationspunkt scheinbares rechtes Auge |
| 48 | Bildebene |
| 50 | Hauptstrahl |
| 52 | Abbildungsstrahlengang |
| 54 | Durchblickpunkt |
| 134 | angenommene Blickrichtung linkes Auge |
| 136 | angenommene Blickrichtung rechtes Auge |
| 138 | Versatz |

**Patentansprüche**

1. Verfahren zum Vermessen der lokalen Brechkraft eines linken und/oder eines rechten Brillenglases (18, 20) in einer Brillenfassung (22) in Trageposition auf einem Kopf (24) eines Brillenträgers, **gekennzeichnet durch** einen Schritt des Erfassens von wenigstens zwei ersten Abbildungen aus relativ zu dem Kopf (24) unterschiedlichen Aufnahmepositionen (26, 26', 26") heraus, wobei die wenigstens zwei ersten Abbildungen (39, 39', 39") jeweils enthalten:

   ein Bild eines i) vorderen Augenabschnitts (28) eines linken Auges (30) oder ii) eines vorderen Augenabschnitts (28) eines linken Auges (30) und eines Teils des Gesichts mit jeweils wenigstens zwei voneinander beabstandeten Strukturpunkten (32) sowie wenigstens einem Abschnitt der Brillenfassung (22) in Trageposition darin, wobei das linke Auge (30) jeweils eine zu der Aufnahmeposition (26, 26', 26") weisende Blickrichtung (34, 34', 34") hat und wobei ein die wenigstens zwei Strukturpunkte (32) abbildender Abbildungsstrahlengang (52) das linke Brillenglas (18) durchsetzt, und/oder alternativ ein Bild eines i) vorderen Augenabschnitts (28) eines rechten Auges (36) oder ii) eines vorderen Augenabschnitts (28) eines rechten Auges (36) und eines Teils des Gesichts mit jeweils wenigstens zwei voneinander beabstandeten Strukturpunkten (32) sowie wenigstens einem Abschnitt der Brillenfassung (22) in Trageposition darin, wobei das rechte Auge (36) jeweils eine zu der Aufnahmeposition (26, 26', 26") weisende Blickrichtung (38, 38', 38") hat und wobei ein die wenigstens zwei Strukturpunkte (32) abbildender Abbildungsstrahlengang (52) das rechte Brillenglas (20) durchsetzt, einen Schritt des Erfassens von wenigstens zwei zweiten Abbildungen (41, 41', 41") aus relativ zu dem Kopf (24) unterschiedlichen Aufnahmepositionen (26, 26', 26") heraus, wobei die wenigstens zwei zweiten Abbildungen (41, 41', 41") jeweils enthalten: ein Bild der wenigstens zwei voneinander beabstandeten Strukturpunkte (32) des i) vorderen Augenabschnitts (28) des linken Auges (30) oder des ii) vorderen Augenabschnitts (28) des linken Auges (30) und des Teils des Gesichts ohne die Brillenfassung (22), enthaltend das linke Brillenglas (18), und/oder alternativ ein Bild der wenigstens zwei Strukturpunkte (32) des i) vorderen Augenabschnitts (28) des rechten Auges (36) oder des ii) vorderen Augenabschnitts (28) des rechten Auges (36) und des Teils des Gesichts ohne die Brillenfassung (22), enthaltend das rechte Brillenglas (20);

einen Schritt des Berechnens der Koordinaten der wenigstens zwei Strukturpunkte (32) des i) vorderen Augenabschnitts (28) des linken Auges (30) oder ii) des vorderen Augenabschnitts (28) des linken Auges und des Teils des Gesichts und/oder der wenigstens zwei Strukturpunkte (32) des i) vorderen Augenabschnitts (28) des rechten Auges (36) oder ii) des vorderen Augenabschnitts (28) des rechten Auges (36) und des Teils des Gesichts aus den wenigstens zwei zweiten Abbildungen (41, 41', 41") in einem Koordinatensystem (25"), das zu einem zu dem Kopf (24) des Brillenträgers ortsfesten Koordinatensystem (25) referenziert ist, mittels Bildauswertung mit Triangulation;

einen Schritt des Bestimmens des Durchblickpunktes (54) durch das linke Brillenglas (18) aus wenigstens einer ersten Abbildung (39, 39', 39") jeweils aus einem aus dem Bild eines vorderen Augenabschnitts (28) des linken Auges (30) mittels Bildauswertung bestimmten Zentrum einer Bildstruktur (33) aus der Gruppe Pupillenbild, Irisbild und Brillenfassungsinformationsdaten und/oder des Bestimmens des Durchblickpunktes (54) durch das rechte Brillenglas (20) aus wenigstens einer ersten Abbildung (39, 39', 39") jeweils aus einem aus dem Bild eines vorderen Augenabschnitts (28) des rechten Auges (36) mittels Bildauswertung bestimmten Zentrum einer Bildstruktur (33) aus der Gruppe Pupillenbild, Irisbild und Brillenfassungsinformationsdaten;

wobei die Brillenfassungsinformationsdaten mit Informationen aus der Gruppe Position, Lage, Form und Koordinaten der Brillenfassung (22) aus wenigstens zwei einen identischen Abschnitt der Brillenfassung (22) enthaltenden Abbildungen aus der Gruppe der wenigstens zwei ersten Abbildungen (39, 39', 39") in einem Koordinatensystem (25") mittels Bildauswertung mit Triangulation berechnet werden, das zu einem zu dem Kopf (24) des Brillenträgers ortsfesten Koordinatensystem (25) referenziert ist; und

einen Schritt des Bestimmens einer lokalen dioptrische Wirkung des linken Brillenglases (18) an dem Durchblickpunkt (54), bei dem aus den aus den wenigstens zwei zweiten Abbildungen (41, 41', 41") berechneten Koordinaten der wenigstens zwei Strukturpunkte (32) des i) vorderen Augenabschnitts (28) des linken Auges (30) oder des ii) vorderen Augenabschnitts (28) des linken Auges (30) und des Teils des Gesichts sowie aus den wenigstens zwei ersten Abbildungen (39, 39', 39") mit Bildern der wenigstens zwei Strukturpunkte (32) die lokale Brechkraft k(x,y) des linken Brillenglases (18) an dem Durchblickpunkt (54) aus einem Verhältnis einer anhand der wenigstens zwei Strukturpunkte (32) ermittelten Größe einer Struktur in wenigstens einer der wenigstens zwei ersten Abbildungen (39, 39', 39") zu der Größe dieser Struktur in wenigsten einer der wenigstens zwei zweiten Abbildungen (41, 41', 41") bestimmt wird; und/oder einer lokalen dioptrische Wirkung des rechten Brillenglases (20) an dem Durchblickpunkt (54), bei dem aus den aus den wenigstens zwei zweiten Abbildungen (41, 41', 41") berechneten Koordinaten der wenigstens zwei Strukturpunkte (32) des (i) vorderen Augenabschnitts (28) des rechten Auges (36) oder des ii) vorderen Augenabschnitts (28) des rechten Auges (36) und des Teils des Gesichts und aus wenigstens zwei ersten Abbildungen (39, 39', 39") mit Bildern der wenigstens zwei Strukturpunkte (32) die lokale Brechkraft k(x,y) des rechten Brillenglases (20) an dem Durchblickpunkt (54) aus einem Verhältnis einer anhand der wenigstens zwei Strukturpunkte (32) ermittelten Größe einer Struktur in wenigstens einer der wenigstens zwei ersten Abbildungen (39, 39', 39") zu der Größe dieser Struktur in wenigsten einer der wenigstens zwei zweiten Abbildungen (41, 41', 41") bestimmt wird.

2. Verfahren nach Anspruch 1, **dadurch gekennzeichnet, dass** in dem Schritt des Bestimmens einer lokalen dioptrischen Wirkung des linken Brillenglases (18) an dem Durchblickpunkt (54) die lokale prismatische Wirkung anhand der Koordinaten eines Augenrotationspunkts (40) oder anhand eines Versatzes des vorderen Augenabschnittes (28) in dem Bild des linken Auges (30) ermittelt wird und/oder einer lokalen dioptrischen Wirkung des rechten Brillenglases (20) an dem Durchblickpunkt (54) die lokale prismatische Wirkung anhand der Koordinaten eines Augenrotationspunkts (40) oder eines Versatzes des vorderen Augenabschnittes (28) in dem Bild des rechten Auges (36) ermittelt wird, wobei die Koordinaten des Augenrotationspunkts (45) des linken Auges (30) und/oder des Augenrotationspunkts (47) des rechten Auges (36) aus einem für das linke Auge (30) angenommenen Augendurchmesser $D_L$ und/oder aus einem für das rechte Auge (36) angenommenen Augendurchmesser $D_R$ sowie aus Koordinaten wenigstens eines Strukturpunkts (32) des Kopfes (24) in einem Koordinatensystem (25"), das zu einem zu dem Kopf (24) des Brillenträgers ortsfesten Koordinatensystem (25) referenziert ist, bestimmt werden, wobei diese Koordinaten aus wenigstens zwei Abbildungen aus der Gruppe der wenigstens zwei ersten Abbildungen (39, 39', 39") und der wenigstens zwei zweiten Abbildungen (41, 41', 41") bestimmt sind;
und/oder
**dadurch gekennzeichnet, dass** die ersten Abbildungen (39, 39', 39") und die wenigstens zwei zweiten Abbildungen (41, 41', 41") mittels wenigstens einer Bilderfassungseinrichtung (12) erfasst werden, die relativ zu dem Kopf (24) des Brillenträgers verlagert wird, indem die Bilderfassungseinrichtung (12) und/oder der Kopf (24) des Brillenträgers bewegt wird.

3. Verfahren nach Anspruch 2, **dadurch gekennzeichnet, dass** die wenigstens eine Bilderfassungseinrichtung (12) von Hand gehalten wird und/oder dass für das Bestimmen extrinsischer Parameter der wenigstens einen Bilderfassungseinrichtung (12) umfassend deren Position und Lage im Raum bei der Aufnahme der ersten Abbildungen (39,39', 39") und/oder der zweiten Abbildungen (41, 41', 41") ein SLAM-Algorithmus verwendet wird.

4. Verfahren nach einem der Ansprüche 2 oder 3, **dadurch gekennzeichnet, dass** für das Berechnen intrinsischer Parameter der Bilderfassungseinrichtung (12) ein SLAM-Algorithmus verwendet wird.

5. Verfahren nach Anspruch 4 **gekennzeichnet durch** intrinsische Parameter aus der Gruppe Brennweite, Bildzentrum, Scherungsparameter, Skalierungsparameter, Verzerrungsparameter.

6. Verfahren nach einem der Ansprüche 1 bis 5, **dadurch gekennzeichnet, dass** für das Berechnen der Koordinaten der wenigstens zwei Strukturpunkte (32) und/oder für das Berechnen der Brechkraft aus den Strukturpunkten (32) der ersten Abbildungen (39, 39', 39") Feature-Detektions-Verfahren zur Detektion der Bilder geeigneter Strukturpunkte (32) und Feature-Matching-Verfahren zur Detektion des Bilds korrespondierender Strukturpunkte (32) in den ersten Abbildungen (39, 39', 39") und/oder den wenigstens zwei zweiten Abbildungen (41, 41', 41") verwendet werden.

7. Verfahren nach Anspruch 6, **dadurch gekennzeichnet, dass** die lokale Brechkraft des linken Brillenglases (18) aus der Ableitung eines Gradientenfelds, das aus der Ablenkung des Abbildungsstrahlengangs (52) für das Bild des Zentrums einer Bildstruktur (33) aus der Gruppe Pupillenbild, Irisbild des vorderen Augenabschnitts (28) des linken Auges (30) durch das linke Brillenglas (18) der Brillenfassung (22) ermittelt wird, mittels eines Optimierungsverfahrens berechnet wird; und/oder dass die lokale Brechkraft des rechten Brillenglases (20) aus der Ableitung eines Gradientenfelds, das aus der Ablenkung des Abbildungsstrahlengangs (52) für das Bild des Zentrums einer Bildstruktur (33) aus der Gruppe Pupillenbild, Irisbild des vorderen Augenabschnitts (28) des rechten Auges (36) durch das rechte Brillenglas (20) der Brillenfassung (22) ermittelt wird, mittels eines Optimierungsverfahrens berechnet wird.

8. Verfahren nach einem der Ansprüchen 1 bis 7, **dadurch gekennzeichnet, dass** die dioptrische Wirkung des linken und/oder rechten Brillenglases (18, 20) an dem Durchblickpunkt (54) aus einem Formunterschied und/oder einem Größenunterschied von Bildern der die wenigstens zwei-Strukturpunkte (32) aufweisenden Strukturen (33) in den ersten Abbildungen (39, 39', 39") und/oder den wenigstens zwei zweiten Abbildungen (41, 41', 41") bestimmt wird.

9. Verfahren zum Vermessen der Brechkraftverteilung eines linken und/oder eines rechten Brillenglases (18, 20) in einer Brillenfassung (22), bei dem eine lokale Brechkraft des linken und/oder des rechten Brillenglases (18, 20) an einer Vielzahl von unterschiedlichen Stellen des linken und/oder rechten Brillenglases (18, 20) nach einem der Ansprüche 1 bis 8 vermessen wird.

10. Verfahren nach einem der Ansprüche 1 bis 9, **dadurch gekennzeichnet, dass** in den ersten Abbildungen und in den wenigstens zwei zweiten Abbildungen die identischen wenigstens zwei voneinander beabstandeten Strukturpunkte (32) erfasst werden.

11. Computerprogrammprodukt mit einem Computerprogramm mit Programmcode zur Durchführung aller Verfahrensschritte, die in einem der Ansprüche 1 bis 10 angegeben sind, wenn das Computerprogramm in eine Rechnereinheit (14) geladen und/oder in einer Rechnereinheit (14) durchgeführt wird.

12. Computerlesbares Speichermedium umfassend Befehle, die bei der Ausführung durch einen Computer diesen veranlassen, alle Verfahrensschritte, die in einem der Ansprüche 1 bis 10 angegeben sind, auszuführen.

13. Computerlesbarer Datenträger, auf dem das Computerprogramm des Computerprogrammprodukts nach Anspruch 11 gespeichert ist.

**14.** Datenträgersignal, welches das Computerprogramm des Computerprogrammprodukts nach Anspruch 11 überträgt.

**15.** Vorrichtung zum Vermessen der lokalen Brechkraft eines linken und/oder eines rechten Brillenglases (18, 20) in einer Brillenfassung (22) mit einer Bilderfassungseinrichtung (12) und mit einer Rechnereinheit (14), in die ein Computerprogramm mit Programmcode zur Durchführung aller Verfahrensschritte geladen ist, die in einem der Ansprüche 1 bis 10 angegeben sind.

**Claims**

**1.** Method for measuring the local refractive power of a left and/or a right spectacle lens (18, 20) in a spectacle frame (22) in the worn position on the head (24) of a spectacle wearer,
**characterized by**

a step of capturing at least two first image representations from different recording positions (26, 26', 26") relative to the head (24), with the at least two first image representations (39, 39', 39") each containing:
an image of an i) anterior eye portion (28) of a left eye (30) or ii) of an anterior eye portion (28) of a left eye (30) and a part of the face with in each case at least two spaced apart structure points (32) and at least one portion of the spectacle frame (22) in the worn position therein, wherein the left eye (30) in each case has a line of sight (34, 34', 34") that points to the recording position (26, 26', 26") and wherein an imaging beam path (52) that images the at least two structure points (32) passes through the left spectacle lens (18), and/or alternatively an image of an i) anterior eye portion (28) of a right eye (36) or ii) of an anterior eye portion (28) of a right eye (36) and a part of the face with in each case at least two spaced apart structure points (32) and at least one portion of the spectacle frame (22) in the worn position therein, wherein the right eye (36) in each case has a line of sight (38, 38', 38") that points to the recording position (26, 26', 26") and wherein an imaging beam path (52) that images the at least two structure points (32) passes through the right spectacle lens (20),
a step of capturing at least two second image representations (41, 41', 41") from different recording positions (26, 26', 26") relative to the head (24), with the at least two second image representations (41, 41', 41") each containing:

an image of the at least two spaced apart structure points (32) of the i) anterior eye portion (28) of the left eye (30) or of the ii) anterior eye portion (28) of the left eye (30) and the part of the face without the spectacle frame (22) containing the left spectacle lens (18), and/or alternatively an image of the at least two structure points (32) of the i) anterior eye portion (28) of the right eye (36) or of the ii) anterior eye portion (28) of the right eye (36) and the part of the face without the spectacle frame (22) containing the right spectacle lens (20);
a step of calculating the coordinates of the at least two structure points (32) of the i) anterior eye portion (28) of the left eye (30) or ii) of the anterior eye portion (28) of the left eye and the part of the face and/or the at least two structure points (32) of the i) anterior eye portion (28) of the right eye (36) or ii) anterior eye portion (28) of the right eye (36) and the part of the face from the at least two second image representations (41, 41', 41") in a coordinate system (25") that is referenced to a coordinate system (25) which is stationary with respect to the head (24) of the spectacle wearer, by means of image evaluation with triangulation;
a step of determining the visual point (54) through the left spectacle lens (18) from at least one first image representation (39, 39', 39"), in each case from a centre of an image structure (33) determined from the image of an anterior eye portion (28) of the left eye (30) by means of image evaluation from the group of pupil image, iris image and spectacle frame information data, and/or determining the visual point (54) through the right spectacle lens (20) from at least one first image representation (39, 39', 39"), in each case from a centre of an image structure (33) determined from the image of an anterior eye portion (28) of the right eye (36) by means of image evaluation from the group of pupil image, iris image and spectacle frame information data;
wherein the spectacle frame information data containing information from the group of position, relative position, shape and coordinates of the spectacle frame (22) are calculated by means of image evaluation with triangulation from at least two image representations containing an identical portion of the spectacle frame (22) from the group of the at least two first image representations (39, 39', 39") in a coordinate system (25") that is referenced to a coordinate system (25) which is stationary with respect to the head (24) of the spectacle wearer; and

a step of determining a local dioptric power of the left spectacle lens (18) at the visual point (54), wherein the local refractive power k(x,y) of the left spectacle lens (18) at the visual point (54) is determined from the coordinates, calculated from the at least two second image representations (41, 41', 41"), of the at least two structure points (32) of the i) anterior eye portion (28) of the left eye (30) or of the ii) anterior eye portion (28) of the left eye (30) and the part of the face and from the at least two first image representations (39, 39', 39") with images of the at least two structure points (32), from a ratio of a size of a structure, ascertained on the basis of the at least two structure points (32) in at least one of the at least two first image representations (39, 39', 39") to the size of this structure in at least one of the at least two second image representations (41, 41', 41"); and/or a local dioptric power of the right spectacle lens (20) at the visual point (54), wherein the local refractive power k(x,y) of the right spectacle lens (20) at the visual point (54) is determined from the coordinates, calculated from the at least two second image representations (41, 41', 41"), of the at least two structure points (32) of the i) anterior eye portion (28) of the right eye (36) or of the ii) anterior eye portion (28) of the right eye (36) and the part of the face and from at least two first image representations (39, 39', 39") with images of the at least two structure points (32), from a ratio of a size of a structure, ascertained on the basis of the at least two structure points (32) in at least one of the at least two first image representations (39, 39', 39") to the size of this structure in at least one of the at least two second image representations (41, 41', 41") .

2. Method according to Claim 1, **characterized in that** in the step of determining a local dioptric power of the left spectacle lens (18) at the visual point (54) the local prismatic effect is ascertained on the basis of the coordinates of an eye rotation point (40) or on the basis of an offset of the anterior eye portion (28) in the image of the left eye (30) and/or in the step of determining a local dioptric power of the right spectacle lens (20) at the visual point (54) the local prismatic effect is ascertained on the basis of the coordinates of an eye rotation point (40) or of an offset of the anterior eye portion (28) in the image of the right eye (36), wherein the coordinates of the eye rotation point (45) of the left eye (30) and/or the coordinates of the eye rotation point (47) of the right eye (36) are determined from an eye diameter $D_L$ assumed for the left eye (30) and/or from an eye diameter $D_R$ assumed for the right eye (36) and from coordinates of at least one structure point (32) of the head (24) in a coordinate system (25") that is referenced to a coordinate system (25) which is stationary with respect to the head (24) of the spectacle wearer, wherein these coordinates are determined from at least two image representations from the group of the at least two first image representations (39, 39', 39") and the at least two second image representations (41, 41', 41");

and/or

**characterized in that** the first image representations (39', 39", 39") and the at least two second image representations (41, 41' 41") are captured by means of at least one image capture device (12) which is displaced relative to the head (24) of the spectacle wearer by virtue of the image capture device (12) and/or the head (24) of the spectacle wearer being moved.

3. Method according to Claim 2, **characterized in that** the at least one image capture device (12) is held in a hand and/or **in that** a SLAM algorithm is used for determining extrinsic parameters of the at least one image capture device (12) comprising the position and relative position thereof in space when recording first image representations (39, 39', 39") and/or the second image representations (41, 41', 41") .

4. Method according to either of Claims 2 and 3, **characterized in that** a SLAM algorithm is used for calculating intrinsic parameters of the image capture device (12).

5. Method according to Claim 4, **characterized by** intrinsic parameters from the group of focal length, image centre, shear parameters, scaling parameters, distortion parameters.

6. Method according to any one of Claims 1 to 5, **characterized in that** for calculating the coordinates of the at least two structure points (32) and/or for calculating the refractive power from the structure points (32) of the first image representations (39, 39', 39"), use is made of feature detection methods for detecting the images of suitable structure points (32) and feature matching methods for detecting the image of corresponding structure points (32) in the first image representations (39, 39', 39") and/or the at least two second image representations (41, 41', 41") .

7. Method according to Claim 6, **characterized in that** the local refractive power of the left spectacle lens (18) is calculated from the derivative of a gradient field by means of an optimization method, said gradient field being ascertained from the deflection of the imaging beam path (52) for the image of the centre of an image structure (33) from the group of pupil image, iris image of the anterior eye portion (28) of the left eye (30) by the left spectacle lens (18) of the spectacle frame (22); and/or **in that** the local refractive power of the right spectacle lens (20) is calculated from the derivative of a gradient field by means of an optimization method, said gradient field being ascertained from the deflection of the imaging beam path (52) for the image of the centre of an image structure (33) from the group of pupil image, iris image of the anterior eye portion (28) of the right eye (36) by the right spectacle lens (20) of the spectacle frame (22).

8. Method according to any one of Claims 1 to 7, **characterized in that** the dioptric power of the left and/or right spectacle lens (18, 20) at the visual point (54) is determined from a shape difference and/or a size difference of images of the structures (33) having the at least two structure points (32) in the first image representations (39, 39', 39") and/or the at least two second image representations (41, 41', 41").

9. Method for measuring the refractive index distribution of a left and/or a right spectacle lens (18, 20) in a spectacle frame (22), wherein a local refractive power of the left and/or of the right spectacle lens (18, 20) is measured according to any one of Claims 1 to 8 at a multiplicity of different points of the left and/or right spectacle lens (18, 20) .

10. Method according to any one of Claims 1 to 9, **characterized in that** the identical at least two spaced apart structure points (32) are captured in the first image representations and in the at least two second image representations.

11. Computer program product comprising a computer program having program code for carrying out all method steps which are specified in any one of Claims 1 to 10 when the computer program is loaded on a computer unit (14) and/or executed on a computer unit (14).

12. Computer-readable storage medium comprising instructions which, upon execution by a computer, cause the latter to carry out all method steps that are specified in any in one of Claims 1 to 10.

13. Computer-readable data medium, on which the computer program of the computer program product according to Claim 11 is stored.

14. Data medium signal which transmits the computer program of the computer program product according to Claim 11.

15. Apparatus for measuring the local refractive power of a left and/or a right spectacle lens (18, 20) in a spectacle frame (22) using an image capture device (12) and using a computer unit (14), loaded in which is a computer program with program code for carrying out all method steps specified in any one of Claims 1 to 10.

**Revendications**

1. Procédé de mesure de la vergence locale d'un verre de lunettes gauche et/ou droit (18, 20) situé dans une monture de lunettes (22) en position de port sur une tête (24) d'un porteur de lunettes,
**caractérisé par**
une étape d'acquisition d'au moins deux premières reproductions depuis différentes positions de capture (26, 26', 26") par rapport à la tête (24), les au moins deux premières reproductions (39, 39', 39") contenant chacune :

une image i) d'une portion d'œil avant (28) d'un œil gauche (30) ou ii) d'une portion d'œil avant (28) d'un œil gauche (30) et d'une partie du visage à chaque fois avec au moins deux points de structure (32) espacés l'un de l'autre et au moins une portion de la monture de lunettes (22) en position de port à l'intérieur, l'œil gauche (30) ayant à chaque fois une direction de vision (34, 34', 34") dirigée vers la position de capture (26, 26', 26") et un trajet de faisceau de reproduction (52), qui reproduit les au moins deux points de structure (32), passant à travers le verre de lunettes gauche (18), et/ou en variante une image i) d'une portion d'œil avant (28) d'un œil droit (36) ou ii) d'une portion d'œil avant (28) d'un œil droit (36) et d'une partie du visage à chaque fois avec au moins deux points de structure (32) espacés l'un de l'autre et au moins une portion de la monture de lunettes (22) en position de port à l'intérieur, l'œil droit (36) ayant une direction de vision (38, 38', 38") dirigée vers la position de capture (26, 26', 26") et un trajet de faisceau de reproduction (52), qui reproduit les au moins deux points de structure (32), passant à travers le verre de lunettes droit (20),
une étape d'acquisition d'au moins deux deuxièmes reproductions (41, 41', 41") depuis différentes positions de capture (26, 26', 26") par rapport à la tête (24), les au moins deux deuxièmes reproductions (41, 41', 41") contenant chacune :

une image des au moins deux points de structure (32) espacés l'un de l'autre i) de la portion d'œil avant (28) de l'œil gauche (30) ou ii) de la portion d'œil avant (28) de l'œil gauche (30) et de la partie du visage sans la monture de lunettes (22), contenant le verre de lunettes gauche (18), et/ou en variante une image des au moins deux points de structure (32) i) de la portion d'œil avant (28) de l'œil droit (36) ou ii) de la portion d'œil avant (28) de l'œil droit (36) et de la partie du visage sans la monture de lunettes (22), contenant le verre de lunettes droit (20) ;

une étape de calcul des coordonnées des au moins deux points de structure (32) i) de la portion d'œil avant (28) de l'œil gauche (30) ou ii) de la portion d'œil avant (28) de l'œil gauche et de la partie du visage et/ou des au moins deux points de structure (32) i) de la portion d'œil avant (28) de l'œil droit (36) ou ii) de la portion d'œil avant (28) de l'œil droit (36) et de la partie du visage des au moins deux deuxièmes reproductions (41, 41', 41") dans un système de coordonnées (25"), qui est référencé à un système de coordonnées (25) qui est fixe par rapport à la tête (24) du porteur de lunettes, au moyen d'une évaluation d'image par triangulation ;

une étape de détermination du point d'observation (54) à travers le verre de lunettes gauche (18) à partir d'au moins une première reproduction (39, 39', 39"), à chaque fois à partir d'un centre d'une structure d'image (33) du groupe comprenant une image de pupille, une image d'iris et des données d'information de monture de lunettes, ledit centre étant déterminé à partir de l'image d'une portion d'œil avant (28) de l'œil gauche (30) au moyen d'une évaluation d'image et/ou de détermination du point d'observation (54) à travers le verre de lunettes droit (20) à partir d'au moins une première reproduction (39, 39', 39"), à chaque fois à partir d'un centre d'une structure d'image (33) du groupe comprenant une image de pupille, une image d'iris et des données d'information de monture de lunettes, ledit centre étant déterminé à partir de l'image d'une portion d'œil avant (28) de l'œil droit (36) au moyen d'une évaluation d'image ; les données d'informations de monture de lunettes, comprenant des informations du groupe comprenant la position, l'emplacement, la forme et les coordonnées de la monture de lunettes (22) étant calculées à partir d'au moins deux reproductions, contenant une portion identique de la monture de lunettes (22), du groupe des au moins deux premières reproductions (39, 39', 39"), au moyen d'une évaluation d'image par triangulation dans un système de coordonnées (25") qui est référencé par rapport à un système de coordonnées (25) fixe par rapport à la tête (24) du porteur de lunettes ; et

une étape de détermination d'une puissance dioptrique locale du verre de lunettes gauche (18) au point d'observation (54), étape dans laquelle à partir des coordonnées des au moins deux points de structure (32) i) de la portion d'œil avant (28) de l'œil gauche (30) ou ii) de la portion d'œil avant (28) de l'œil gauche (30) et de la partie du visage, lesdites coordonnées étant calculées à partir des au moins deux deuxièmes reproductions (41, 41', 41"), ainsi qu'à partir des au moins deux premières reproductions (39, 39', 39") comprenant des images des au moins deux points de structure (32), la vergence locale k(x,y) du verre de lunettes gauche (18) au point d'observation (54) est déterminée à partir d'un rapport d'une dimension d'une structure, déterminée à l'aide des au moins deux points de structure (32), dans au moins une des au moins deux premières reproductions (39, 39', 39") à la dimension de cette structure dans au moins une des au moins deux deuxièmes reproductions (41, 41', 41") ; et/ou une puissance dioptrique locale du verre de lunettes droit (20) au point d'observation (54) auquel, à partir des coordonnées des au moins deux points de structure (32) (i) de la portion d'œil avant (28) de l'œil droit (36) ou ii) de la portion d'œil avant (28) de l'œil droit (36) et de la partie du visage, lesdites coordonnées étant calculées à partir des au moins deux deuxièmes reproductions (41, 41', 41"), ainsi qu'à partir d'au moins deux premières reproductions (39, 39', 39") comprenant des images des au moins deux points de structure (32), la vergence locale k(x,y) du verre de lunettes droit (20) au point d'observation (54) est déterminée à partir d'un rapport d'une dimension d'une structure, déterminée à l'aide des au moins deux points de structure (32) dans au moins une des au moins deux premières reproductions (39, 39', 39") à la dimension de cette structure dans au moins une des au moins deux deuxièmes reproductions (41, 41', 41").

2. Procédé selon la revendication 1, **caractérisé en ce qu'**à l'étape de détermination d'une puissance dioptrique locale du verre de lunettes gauche (18) au point d'observation (54), la puissance prismatique locale est déterminée à l'aide des coordonnées d'un point de rotation d'œil (40) ou à l'aide d'un décalage de la portion d'œil avant (28) dans l'image de l'œil gauche (30) et/ou, à l'étape de détermination d'une puissance dioptrique locale du verre de lunettes droit (20) au point d'observation (54), la puissance prismatique locale est déterminée à l'aide des coordonnées d'un point de rotation d'œil (40) ou d'un décalage de la portion d'œil avant (28) dans l'image de l'œil droit (36), les coordonnées du point de rotation d'œil (45) de l'œil gauche (30) et/ou du point de rotation d'œil (47) de l'œil droit (36) étant déterminées à partir d'un diamètre d'œil $D_L$ supposé pour l'œil gauche (30) et/ou à partir d'un diamètre $D_R$ supposé pour l'œil droit (36) et à partir de coordonnées d'au moins un point de structure (32) de la tête (24) dans un système de coordonnées (25"), qui est référencé par rapport à un système de coordonnées (25) fixe par rapport à la tête (24) du porteur de lunettes, ces coordonnées étant déterminées à partir d'au moins deux reproductions du groupe des au moins deux premières reproductions (39, 39', 39") et des au moins deux deuxièmes reproductions (41, 41', 41") ; et/ou

**caractérisé en ce que** les premières reproductions (39, 39', 39") et les au moins deux deuxièmes reproductions (41, 41', 41") sont acquises au moyen d'au moins une installation d'acquisition d'images (12) qui est déplacée par rapport à la tête (24) du porteur de lunettes par déplacement de l'installation d'acquisition d'images (12) et/ou de la tête (24) du porteur de lunettes.

3. Procédé selon la revendication 2, **caractérisé en ce que** l'au moins une installation d'acquisition d'images (12) est tenu à la main et/ou **en ce qu'**un algorithme SLAM est utilisé pour déterminer des paramètres extrinsèques de l'au moins une installation d'acquisition d'images (12), incluant la position et l'emplacement celui-ci dans l'espace lors de la capture des premières reproductions (39, 39', 39") et/ou des deuxièmes reproductions (41, 41', 41").

4. Procédé selon la revendication 2 ou 3, **caractérisé en ce qu'**un algorithme SLAM est utilisé pour calculer des paramètres intrinsèques de l'installation d'acquisition d'images (12).

5. Procédé selon la revendication 4, **caractérisé par** des paramètres intrinsèques du groupe comprenant la distance focale, le centre d'image, les paramètres de cisaillement, les paramètres d'échelle, les paramètres de distorsion.

6. Procédé selon l'une des revendications 1 à 5, **caractérisé en ce qu'**un procédé de détection de caractéristiques destiné à détecter les images de points de structure appropriés (32) et un procédé de mise en correspondance de caractéristiques destiné à détecter l'image de points de structure correspondants (32) dans les premières reproductions (39, 39', 39") et/ou les au moins deux deuxièmes reproductions (41, 41', 41") sont utilisés pour calculer les coordonnées des au moins deux points de structure (32) et/ou pour calculer la vergence à partir des points de structure (32) des premières reproductions (39, 39', 39").

7. Procédé selon la revendication 6, **caractérisé en ce que** la vergence locale du verre de lunettes gauche (18) est calculée au moyen d'un procédé d'optimisation à partir de la dérivation d'un champ de gradient, qui est déterminé à partir de la déviation du trajet de faisceau de reproduction (52) pour l'image du centre d'une structure d'image (33) du groupe comprenant une image de pupille, une image d'iris de la portion d'œil avant (28) de l'œil gauche (30) à travers le verre de lunettes gauche (18) de la monture de lunettes (22) ; et/ou **en ce que** la vergence locale du verre de lunettes droit (20) est calculée au moyen d'un procédé d'optimisation à partir de la dérivation d'un champ de gradient, qui est déterminé à partir de la déviation du trajet de faisceau de reproduction (52) pour l'image du centre d'une structure d'image (33) du groupe comprenant une image de pupille, une image d'iris de la portion d'œil avant (28) de l'œil droit (36) à travers le verre de lunettes droit (20) de la monture de lunettes (22).

8. Procédé selon l'une des revendications 1 à 7, **caractérisé en ce que** la puissance dioptrique du verre de lunettes gauche et/ou droit (18, 20) au point d'observation (54) est déterminée à partir d'une différence de forme et/ou d'une différence de dimension d'images des structures (33), comportant les au moins deux points de structure (32), dans les premières reproductions (39, 39', 39") et/ou les au moins deux deuxièmes reproductions (41, 41', 41").

9. Procédé de mesure de la distribution de vergence d'un verre de lunettes gauche et/ou droit (18, 20) dans une monture de lunettes (22), procédé dans lequel une vergence locale du verre de lunettes gauche et/ou droit (18, 20) est mesurée dans un grand nombre de positions différentes du verre de lunettes gauche et/ou droit (18, 20) selon l'une des revendications 1 à 8.

10. Procédé selon l'une des revendications 1 à 9, **caractérisé en ce que** les au moins deux points de structure identiques (32) espacés l'un de l'autre sont acquis dans les premières reproductions et dans les au moins deux deuxièmes reproductions.

11. Progiciel comprenant un logiciel comprenant un code de programme destiné à réaliser toutes les étapes de procédé qui sont indiquées dans l'une des revendications 1 à 10 lorsque le logiciel est chargé dans une unité informatique (14) et/ou est exécuté dans une unité informatique (14).

**12.** Support de stockage lisible par ordinateur comprenant des instructions qui, lorsqu'elles sont exécutées par un ordinateur, ordonnent à celui-ci d'exécuter toutes les étapes de procédé qui sont indiquées dans l'une des revendications 1 à 10.

**13.** Support de données lisible par ordinateur sur lequel est stocké le logiciel du progiciel selon la revendication 11.

**14.** Signal de support de données qui transmet le logiciel du progiciel selon la revendication 11.

**15.** Dispositif de mesure de la vergence locale d'un verre de lunettes gauche et/ou droit (18, 20) dans une monture de lunettes (22), ledit dispositif comprenant une installation d'acquisition d'images (12) et une unité informatique (14) dans laquelle est chargé un logiciel comprenant un code de programme destiné à exécuter toutes les étapes de procédé qui sont indiquées dans l'une des revendications 1 à 10.

Fig.1

Fig.2

28 44 32    31 42 3228

36 37 33 32    33 32
30
32

39

24

Fig.3

44 32    42 32

33 32    33 32

39'

24

Fig.4

Fig.5

Fig.6

Fig.7

Fig.8

Fig.9

32          32

33 32        33 32

~41

Fig.10

32          32

33 32        33 32

~41'

Fig.11

32          32

33 32        33 32

~41''

Fig.12

Fig.13

Fig.14

Fig.15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016207412 A1
- EP 2608109 A1
- WO 2016076530 A1
- US 20150029323 A1
- EP 19170561
- EP 19170551
- EP 19170558
- EP 19170715


**In der Beschreibung aufgeführte Nicht-Patentliteratur**

- **R. HARTLEY ; A. ZISSERMAN.** Multiple View Geometry. Cambridge University Press, 2004
- **A. TEICHMANN et al.** Unsupervised intrinsic calibration of depth sensors via SLAM. *Robotics: Science and Systems 2013,* 24. Juni 2013
- **R. HARTLEY ; A. ZISSERMAN.** Multiple View Geometry. Cambridge University Press, 2004, 153-193
- **K.N. KUTUKALOS ; E. STEGER.** A Theory of Refractive and specular 3D Shape by Light-Path Triangulation. *International Journals of Computer Vision,* 2008, vol. 76 (1), 13-29
- **K.N. KUTUKALOS ; E. STEGER.** A Theory of Refractive and specular 3D Shape by Light-Path Triangulation, University of Toronto. *Proc. 10th IEEE Int. Conf. on Computer Vision,* 2005, 1448-1455